# EUROPEAN PATENT SPECIFICATION

(11) **EP 3 913 957 B1**
(45) Date of publication and mention of the grant of the patent: **14.10.2026**
(21) Application number: 20763359.5
(22) Date of filing: 04.02.2020
(51) Int. Cl.: H04L 5/00, H04L 5/14, H04W 24/02

(54) **METHOD FOR CONFIGURING FULL DUPLEX REFERENCE SIGNAL, TERMINAL AND BASE STATION**
VERFAHREN ZUM KONFIGURIEREN EINES VOLLDUPLEX-REFERENZSIGNALS, ENDGERÄT UND BASISSTATION
PROCÉDÉ DE CONFIGURATION D'UN SIGNAL DE RÉFÉRENCE EN DUPLEX INTÉGRAL, TERMINAL ET STATION DE BASE

(30) Priority: 28.02.2019 CN 201910152630
(43) Date of publication of application: 24.11.2021
(73) Proprietor: Huawei Technologies Co., Ltd., Shenzhen, Guangdong 518129 (CN)
(72) Inventor: ZHANG, Gongzheng, Shenzhen, Guangdong 518129 (CN); KONG, Chuili, Shenzhen, Guangdong 518129 (CN)
(74) Representative: Gill Jennings & Every LLP
(86) International application number: PCT/CN2020/074296
(87) International publication number: WO 2020/173286

(56) References cited:
- EP-A1- 3 016 305
- EP-A1- 3 878 231
- WO-A1-2017/171746
- WO-A1-2018/128297
- WO-A1-2018/128428
- CN-A- 104 735 789
- CN-A- 105 991 256
- CN-A- 106 063 178
- US-A1- 2018 098 321
- LG ELECTRONICS INC.: "Summary on moderated e-mail discussion regarding flexible/full duplex SIDs", 3GPP RAN#79 RP-180323, 22 March 2018 (2018-03-22), XP051411075, DOI: 20200410174821A

## Description

### TECHNICAL FIELD

Embodiments of this application relate to the communications field, and in particular, to a full-duplex reference signal configuration method, a terminal, and a base station.

### BACKGROUND

Currently, in a full-duplex or hybrid-duplex system, there is self-interference and mutual interference on a terminal side. Therefore, a terminal needs to estimate an interference channel and perform interference cancellation based on an estimation result, to improve signal quality. However, an interference signal (which is referred to as an uplink signal) and a wanted signal (which is referred to as a downlink signal) on the terminal side are asynchronous, and consequently an uplink reference signal overlaps downlink data, that is, the downlink data causes interference to the uplink reference signal. In this case, the estimation result of the interference channel is affected, and consequently an interference suppression effect is reduced.

EP 3 016 305 A1 discloses a method and apparatus for estimating self-interference in wireless access systems supporting full-duplex radio communication.

### SUMMARY

This application provides a full-duplex reference signal configuration method, a terminal, and a base station, to prevent downlink data from interfering with an uplink reference signal to some extent.

The invention is defined by the subject-matter of the independent claims. Particular embodiments of the invention are set out in the dependent claims.

### BRIEF DESCRIPTION OF DRAWINGS

To describe technical solutions in the embodiments of this application more clearly, the following briefly describes the accompanying drawings used in describing the embodiments of this application.
FIG. 1 is a schematic diagram of a communications system;
FIG. 2a is a schematic structural diagram of a base station;
FIG. 2b is a schematic structural diagram of a terminal;
FIG. 3 is a schematic diagram of a full-duplex mode;
FIG. 4 shows a communications mode according to an example;
FIG. 5 shows a communications mode according to an example;
FIG. 6 is a schematic diagram of a signal delay according to an example;
FIG. 7 is a schematic diagram of an interference situation according to an example;
FIG. 8 is a schematic diagram of an interference situation according to an example;
FIG. 9 is a schematic diagram of a reference signal according to an example;
FIG. 10 is a schematic diagram of a reference signal according to an example;
FIG. 11 is a schematic flowchart of a full-duplex reference signal configuration method according to an embodiment of this application;
FIG. 12 is a schematic flowchart of a full-duplex reference signal configuration method;
FIG. 13 is a schematic structural diagram of a reference signal;
FIG. 14 is a schematic structural diagram of a reference signal;
FIG. 15 is a schematic structural diagram of a reference signal;
FIG. 16 is a schematic structural diagram of a reference signal;
FIG. 17 is a schematic flowchart of a full-duplex reference signal;
FIG. 18a is a schematic structural diagram of a reference signal;
FIG. 18b is a schematic structural diagram of a reference signal;
FIG. 19 is a schematic structural diagram of a reference signal;
FIG. 20 is a schematic structural diagram of a reference signal;
FIG. 21 is a schematic structural diagram of a reference signal;
FIG. 22a is a schematic structural diagram of a reference signal;
FIG. 22b is a schematic structural diagram of a reference signal;
FIG. 23 is a schematic flowchart of a full-duplex reference signal;
FIG. 24 is a schematic flowchart of a full-duplex reference signal;
FIG. 25 is a schematic structural diagram of a terminal;
FIG. 26 is a schematic structural diagram of a base station; and
FIG. 27 is a schematic structural diagram of an apparatus according to an embodiment of this application.

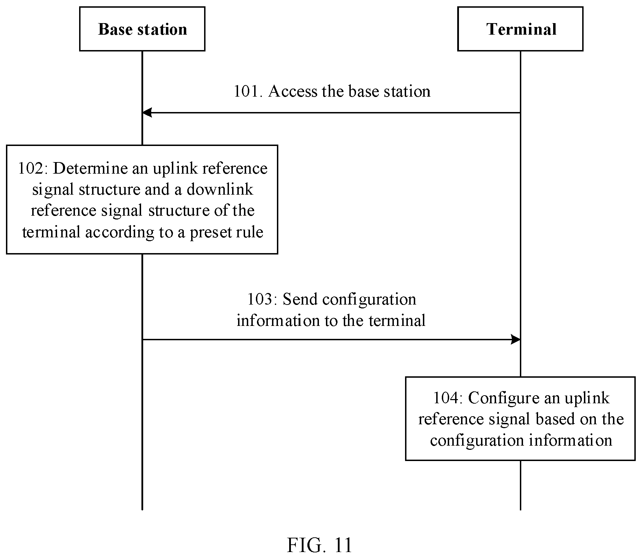

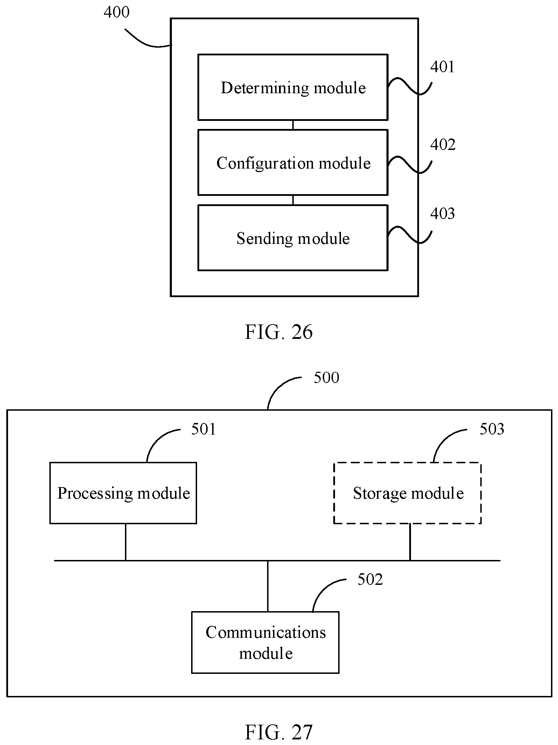

The invention is described by the combination of the embodiments related to figures 11 and 27.

### DESCRIPTION OF EMBODIMENTS

The following clearly describes technical solutions in the embodiments of this application with reference to the accompanying drawings in the embodiments of this application.

The term "and/or" in this specification describes only an association relationship for describing associated objects and represents that three relationships may exist. For example, A and/or B may represent the following three cases: Only A exists, both A and B exist, and only B exists.

In the specification and claims in the embodiments of this application, the terms "first", "second", and so on are intended to distinguish between different objects but do not indicate a particular order of the objects. For example, a first target object and a second target object are intended to distinguish between different target objects, but do not indicate a particular order of the target objects.

In addition, in the embodiments of this application, the word " example" or "for example" is used to represent giving an example, an illustration, or a description. Any embodiment or design scheme described as an "example" or "for example" in the embodiments of this application shall not be explained as being more preferred or having more advantages than another embodiment or design scheme. Exactly, use of the word " example" or "for example" or the like is intended to present a relative concept in a specific manner.

In the description of the embodiment of this application, unless otherwise stated, "a plurality of" means two or more than two. For example, "a plurality of processing units" means two or more processing units, and "a plurality of systems" means two or more systems.

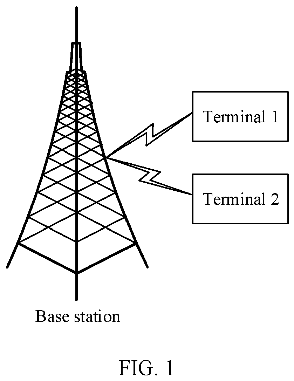

Before the technical solutions in the embodiments of this application are described, a communications system in the embodiments of this application is first described with reference to the accompanying drawings. FIG. 1 is a schematic diagram of a communications system according to an embodiment of this application. The communications system includes a base station, a terminal 1, and a terminal 2. In a specific implementation process of this embodiment of this application, the terminal may be a device such as a computer, a smartphone, a telephone, a cable television set-top box, or a digital subscriber line router. It should be noted that in actual application, there may be one or more base stations and one or more terminals. Quantities of base stations and terminals in the communications system shown in FIG. 1 are merely adaptive examples. This is not limited in this application.

The communications system may be configured to support a fourth-generation (fourth generation, 4G) access technology, for example, a long term evolution (long term evolution, LTE) access technology. Alternatively, the communications system may support a fifth-generation (fifth generation, 5G) access technology, for example, a new radio (new radio, NR) access technology. Alternatively, the communications system may be configured to support a third-generation (third generation, 3G) access technology, for example, a universal mobile telecommunications system (universal mobile telecommunications system, UMTS) access technology. Alternatively, the communications system may be configured to support a second-generation (second generation, 2G) access technology, for example, a global system for mobile communications (global system for mobile communications, GSM) access technology. Alternatively, the communications system may be a communications system configured to support a plurality of wireless technologies, for example, to support an LTE technology and an NR technology. In addition, the communications system may be applied to a narrow band internet of things (Narrow Band-Internet of Things, NB-IoT) system, an enhanced data rate for GSM evolution (Enhanced Data rate for GSM Evolution, EDGE) system, a wideband code division multiple access (Wideband Code Division Multiple Access, WCDMA) system, a code division multiple access 2000 (Code Division Multiple Access 2000, CDMA2000) system, a time division-synchronous code division multiple access (Time Division-Synchronous Code Division Multiple Access, TD-SCDMA) system, a long term evolution (Long Term Evolution, LTE) system, and a future-oriented communications technology.

In addition, the base station in FIG. 1 may be configured to support terminal access. For example, the base station may be a base transceiver station (base transceiver station, BTS) and a base station controller (base station controller, BSC) in a 2G access technology communications system, a nodeB (nodeB) and a radio network controller (radio network controller, RNC) in a 3G access technology communications system, an evolved nodeB (evolved nodeB, eNB) in a 4G access technology communications system, or a next-generation nodeB (next generation nodeB, gNB), a transmission reception point (transmission reception point, TRP), a relay node (relay node), or an access point (access point, AP) in a 5G access technology communications system. For ease of description, in all the embodiments of this application, all the foregoing apparatuses that provide a wireless communication function for the terminal are referred to as a network device or a base station.

The terminal in FIG. 1 may be a device that provides voice or data connectivity for a user. For example, the terminal may also be referred to as a mobile station (mobile station), a subscriber unit (subscriber unit), a station (station), or a terminal equipment (terminal equipment, TE). The terminal may be a cellular phone (cellular phone), a personal digital assistant (personal digital assistant, PDA), a wireless modem (modem), a handheld device (handheld), a laptop computer (laptop computer), a cordless phone (cordless phone), a wireless local loop (wireless local loop, WLL) station, a tablet computer (pad), or the like. With development of wireless communications technologies, a device that can access a communications system, a device that can communicate with a network side in a communications system, or a device that can communicate with another object by using a communications system may be the terminal in this embodiment of this application, for example, a terminal and a vehicle in intelligent transportation, a household device in a smart household, an electricity meter reading instrument in a smart grid, a voltage monitoring instrument, an environment monitoring instrument, a video surveillance instrument in an intelligent security network, or a cash register. In this embodiment of this application, the terminal may communicate with a base station, for example, the base station in FIG. 1. A plurality of terminals may communicate with each other. The terminal may be stationary or mobile.

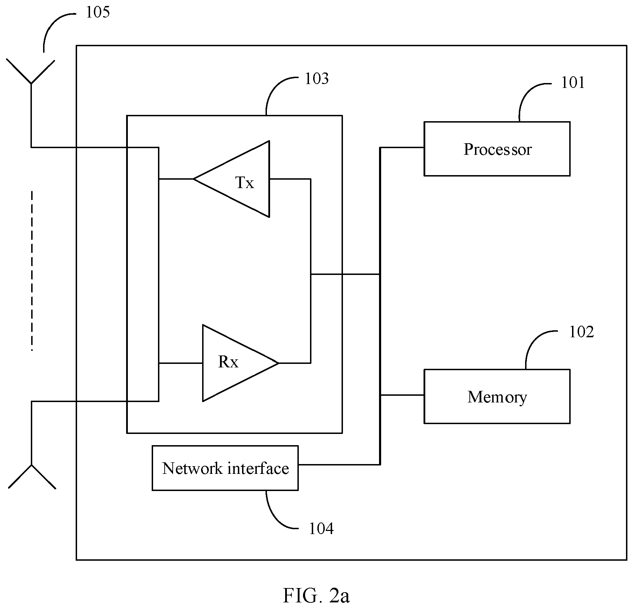

FIG. 2a is a schematic structural diagram of a base station.

In FIG. 2a, the base station includes at least one processor 101, at least one memory 102, at least one transceiver 103, at least one network interface 104, and one or more antennas 105. The processor 101, the memory 102, the transceiver 103, and the network interface 104 are connected, for example, are connected by using a bus. The antenna 105 is connected to the transceiver 103. The network interface 104 is configured to enable the base station to be connected to another communications device by using a communication link. In the embodiments of this application, the connection may include various interfaces, transmission lines, buses, or the like. This is not limited in the embodiments.

A processor, for example, the processor 101, in the embodiments of this application may include at least one of the following types: a general-purpose central processing unit (Central Processing Unit, CPU), a digital signal processor (Digital Signal Processor, DSP), a microprocessor, an application-specific integrated circuit (Application-Specific Integrated Circuit, ASIC), a microcontroller (Microcontroller Unit, MCU), a field programmable gate array (Field Programmable Gate Array, FPGA), or an integrated circuit configured to implement a logical operation. For example, the processor 101 may be a single-core (single-CPU) processor or a multi-core (multi-CPU) processor. The at least one processor 101 may be integrated into one chip or located on a plurality of different chips.

A memory, for example, the memory 102, in the embodiments of this application may include at least one of the following types: a read-only memory (read-only memory, ROM), another type of static storage device that can store static information and an instruction, a random access memory (random access memory, RAM), another type of dynamic storage device that can store information and an instruction, or an electrically erasable programmable read-only memory (electrically erasable programmable read-only memory, EEPROM). In some scenarios, the memory may alternatively be a compact disc read-only memory (compact disc read-only memory, CD-ROM) or other compact disc storage, optical disc storage (which includes a compact disc, a laser disc, an optical disc, a digital versatile disc, a Blu-ray disc, and the like), a disk storage medium or another magnetic storage device, or any other medium that can be used to carry or store expected program code in an instruction or a data structure form and that can be accessed by a computer. However, this is not limited thereto.

The memory 102 may exist independently, and is connected to the processor 101. Optionally, the memory 102 and the processor 101 may be integrated, for example, integrated into one chip. The memory 102 can store program code for executing the technical solutions in the embodiments of this application, and the processor 101 controls execution of the program code. Various types of computer program code to be executed may also be considered as drivers of the processor 101. For example, the processor 101 is configured to execute the application program code stored in the memory 102, to implement the technical solutions in the embodiments of this application. Optionally, the memory 102 may be located outside a chip, and is connected to the processor 101 by using an interface.

The transceiver 103 may be configured to support receiving or sending of a radio frequency signal between an access network device and a terminal, and the transceiver 103 may be connected to the antenna 105. The transceiver 103 includes a transmitter Tx and a receiver Rx. Specifically, the one or more antennas 105 may receive a radio frequency signal, and the receiver Rx of the transceiver 103 is configured to: receive the radio frequency signal from the antenna, convert the radio frequency signal into a digital baseband signal or a digital intermediate frequency signal, and provide the digital baseband signal or the digital intermediate frequency signal for the processor 101, so that the processor 101 performs further processing, for example, demodulation processing and decoding processing, on the digital baseband signal or the digital intermediate frequency signal. In addition, the transmitter Tx of the transceiver 103 is further configured to: receive the modulated digital baseband signal or digital intermediate frequency signal from the processor 101, convert the modulated digital baseband signal or digital intermediate frequency signal into a radio frequency signal, and send the radio frequency signal by using the one or more antennas 105. Specifically, the receiver Rx may selectively perform one or more levels of down-mixing processing and analog-to-digital conversion processing on the radio frequency signal, to obtain the digital baseband signal or the digital intermediate frequency signal. A sequence of performing the down-mixing processing and the analog-to-digital conversion processing is adjustable. The transmitter Tx may selectively perform one or more levels of up-mixing processing and digital-to-analog conversion processing on the modulated digital baseband signal or digital intermediate frequency signal, to obtain the radio frequency signal. A sequence of performing the up-mixing processing and the digital-to-analog conversion processing is adjustable. The digital baseband signal and the digital intermediate frequency signal may be collectively referred to as a digital signal.

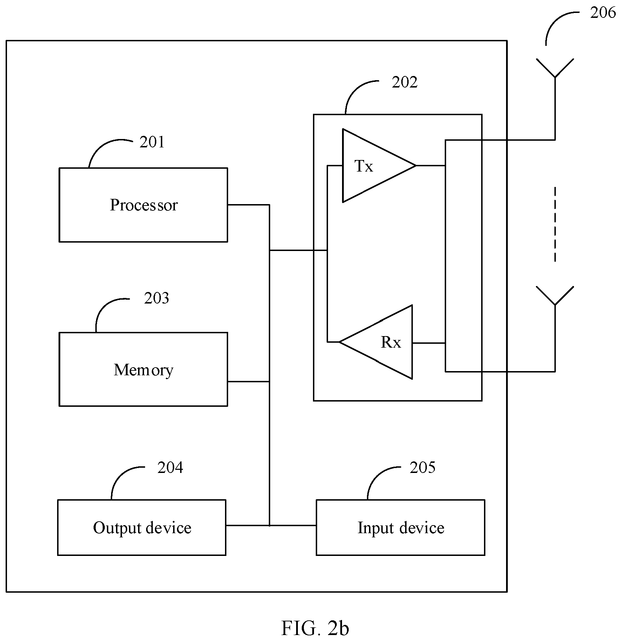

FIG. 2b is a schematic structural diagram of a terminal. In FIG. 2b,
the terminal includes at least one processor 201, at least one transceiver 202, and at least one memory 203. The processor 201, the memory 203, and the transceiver 202 are connected. Optionally, the terminal may further include an output device 204, an input device 205, and one or more antennas 206. The antenna 206 is connected to the transceiver 202, and the output device 204 and the input device 205 are connected to the processor 201.

For description of the transceiver 202, the memory 203, and the antenna 206, refer to the related description in FIG. 2a. Similar functions are implemented.

The processor 201 may be a baseband processor or a CPU. The baseband processor and the CPU may be integrated or separated.

The processor 201 may be configured to implement various functions for the terminal. For example, the processor 201 is configured to process a communications protocol and communications data, or is configured to: control the entire terminal, execute a software program, and process data of the software program, or is configured to assist in completing a computing processing task, for example, graphics, image, or audio processing. Alternatively, the processor 201 is configured to implement one or more of the foregoing functions.

The output device 204 communicates with the processor 201, and may display information in a plurality of manners. For example, the output device 204 may be a liquid crystal display (Liquid Crystal Display, LCD), a light emitting diode (Light Emitting Diode, LED) display device, a cathode ray tube (Cathode Ray Tube, CRT) display device, or a projector (projector). The input device 205 communicates with the processor 201, and may receive user input in a plurality of manners. For example, the input device 205 may be a mouse, a keyboard, a touchscreen device, or a sensing device.

The memory 203 may exist independently, and is connected to the processor 201. Optionally, the memory 202 and the processor 201 may be integrated, for example, integrated into one chip. The memory 202 can store program code for executing the technical solutions in the embodiments of this application, and the processor 201 controls execution of the program code. Various types of computer program code to be executed may also be considered as drivers of the processor 201. For example, the processor 201 is configured to execute the application program code stored in the memory 202, to implement the technical solutions in the embodiments of this application. Optionally, the memory 202 may be located outside a chip, and is connected to the processor 201 by using an interface.

To make a person skilled in the art better understand the technical solutions of this application, the following briefly describes a conventional technology in this application.

Currently, based on different manners of dividing a time-frequency resource for an uplink and a downlink, half-duplex modes may be classified into time division duplex (Time Division Duplex, TDD) and frequency division duplex (Frequency Division Duplex, FDD). TDD means that different slots are used for the uplink and the downlink for distinction. For example, in an LTE system, a frame is divided into an uplink subframe and a downlink subframe for uplink and downlink transmission. Usually, to avoid uplink-downlink interference, in TDD, a guard period needs to be added when switching is performed from the downlink subframe to the uplink subframe (no guard period may be added when switching is performed from the uplink subframe to the downlink subframe because a base station may control a switching time), to maintain relative synchronization in an entire network. Frequency division duplex means that different spectrums are used for the uplink and the downlink for distinction. Usually, to avoid uplink-downlink interference, a guard band is reserved between an uplink spectrum and a downlink spectrum in a frequency division duplex system.

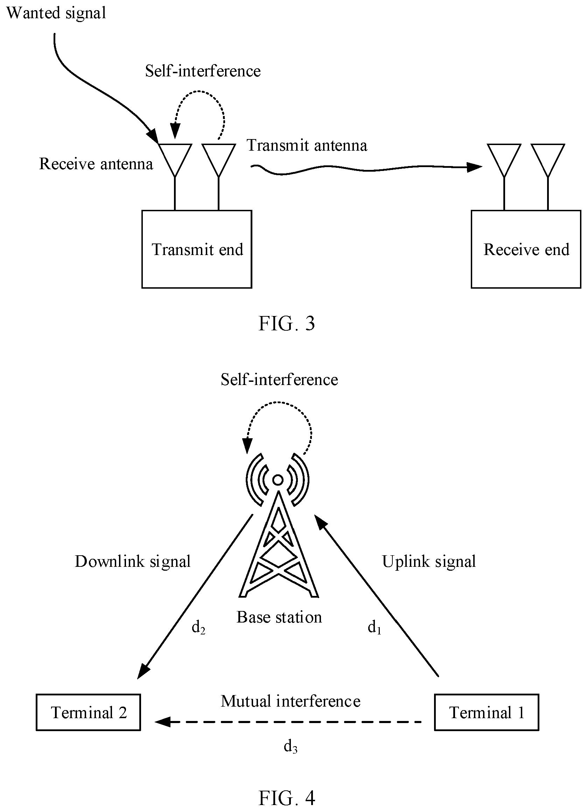

During implementation of simultaneous uplink and downlink transmission on a same time-frequency resource, spectral efficiency in a full-duplex technology is twice that in a half-duplex technology. In a full-duplex system, a device simultaneously performs sending and receiving at a same frequency, and a receive antenna receives a signal sent from the device, that is, there is self-interference. A transmit antenna and a receive antenna of a same device are close to each other, and even are a same antenna, and therefore strength of a self-interference signal is far greater than that of a wanted signal. Consequently, there is device saturation in a receiver, resulting in loss of the wanted signal. Therefore, the receiver needs to cancel self-interference before demodulating the wanted signal. A key to self-interference cancellation is to estimate a channel from a transmit signal to the receive antenna, precisely reconstruct a self-interference signal, and subtract the self-interference signal from a received signal (in other words, cancel the interference signal from the received signal). FIG. 3 is a schematic diagram of a full-duplex mode. In FIG. 3, a transmit end sends a transmit signal to a receive end by using a transmit antenna. In addition, the transmit end may receive a wanted signal (the wanted signal may be from another device not shown or the receive end in the figure) by using a receive antenna. In this case, for the transmit end in the full-duplex mode, the transmit signal causes self-interference to the wanted signal.

The full-duplex technology is applied to a wireless communications system mainly in the following two manners:
(1) FIG. 4 shows a communications mode applied to the communications system shown in FIG. 1. A base station works in a full-duplex mode, and a terminal works in a half-duplex mode.

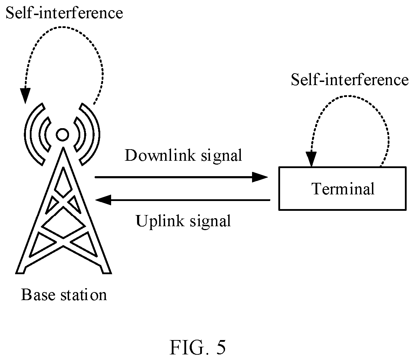

(2) FIG. 5 shows another communications mode applied to the communications system shown in FIG. 1. Both a base station and a terminal work in a full-duplex mode.

Specifically, in the communications mode shown in FIG. 4, the base station receives a self-interference signal from a base station transmitter. In addition to a wanted signal (namely, a downlink signal) from the base station, a downlink user (a terminal 1 in FIG. 4) further receives a signal (namely, an uplink signal sent by a terminal 2) from an uplink user (the terminal 2 in FIG. 4), namely, a mutual-interference signal.

However, in the communications mode shown in FIG. 5, both the base station and the terminal are in the full-duplex mode. Therefore, both the base station and the terminal are affected by self-interference.

It should be noted that with reference to the communications modes shown in FIG. 4 and FIG. 5, there may be a hybrid-duplex communications system. For example, the terminal 1 and the terminal 2 in FIG. 4 may alternatively be terminals in the full-duplex mode, or the terminal 1 is a terminal in the full-duplex mode, and the terminal 2 is a terminal in the half-duplex mode. It should be noted that when the terminal 1 and the terminal 2 are in the full-duplex mode or at least one of the terminals is in the full-duplex mode, due to function limitation, the base station can receive, on a same time-domain resource, an uplink signal sent by only one terminal, and send a downlink signal to one terminal (which may be a different terminal, as shown in FIG. 4, or which may be the terminal corresponding to the uplink signal, as shown in FIG. 5). Therefore, regardless of a working status (namely, full-duplex or half-duplex) of the terminal, when there are a plurality of terminals, there is only self-interference or mutual interference on a terminal side, and there is no scenario in which self-interference and mutual interference coexist.

To obtain a full-duplex gain, in the system, the two types of interference (including self-interference and mutual interference) need to be processed through interference cancellation or by using an interference suppression technology. In these technologies, a channel through which an interference signal passes needs to be accurately estimated.

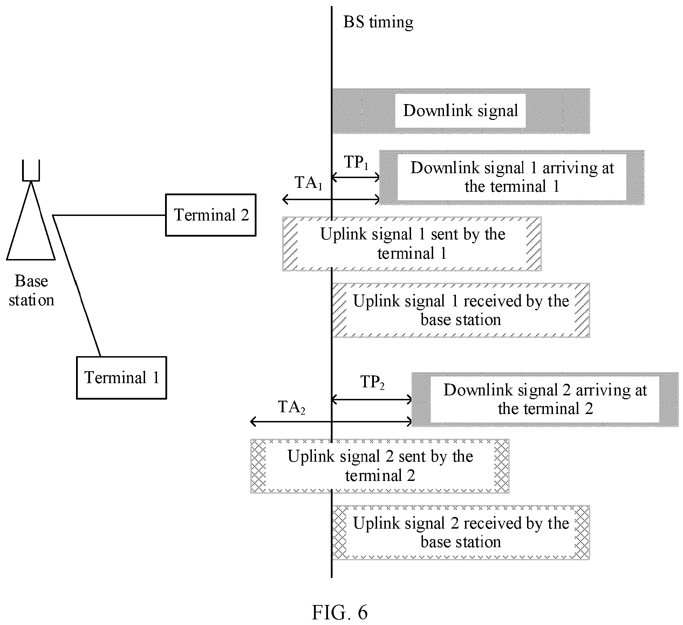

In a conventional technology, synchronization is a basic requirement of a cellular mobile communications system, especially in LTE and 5G NR systems based on orthogonal frequency division multiplexing (Orthogonal Frequency Division Multiplexing, OFDM). Asynchronization causes serious inter-symbol and intercarrier interference. In a conventional cellular mobile communications system, during downlink transmission, downlink signals of terminals in a cell are sent by a base station, and therefore synchronization can be implemented between the downlink signals. In an uplink transmission process, the base station receives uplink signals sent by different terminals, and because there may be different distances between the terminals and the base station, the uplink signals may arrive at the base station at different times based on a propagation time difference of the signals. To implement uplink synchronization (that is, uplink signals in a same slot arrive at the base station at a same time), a timing advance mechanism is used in the cellular communications system. That is, different terminals send uplink signals with a specific timing advance based on distances between the terminals and the base station, to ensure that the uplink signals sent by the terminals arrive at the base station at a same time. As shown in FIG. 6, the terminal 1 sends an uplink signal 1 with an advance of TA₁. A distance between the terminal 2 and the base station is longer than that between the terminal 1 and the base station, and therefore the terminal 2 sends an uplink signal 2 with an advance of TA₂, and where TA₂ is greater than TA₁. In this way, the uplink signal 1 and the uplink signal 2 arrive at the base station at a same time, to implement synchronous uplink transmission. FIG. 6 further shows a transmission delay of a downlink signal. In FIG. 6, the base station sends a downlink signal. A downlink signal 1 sent to the terminal 1 arrives at the terminal 1 with a delay of TP₁ (that is, a difference between a sending moment and a moment of receiving by the terminal is TP₁), and a downlink signal 2 sent to the terminal 2 arrives at the terminal 2 with a delay of TP₂.

In addition, to cope with a multipath effect brought by a complex radio propagation environment, a cyclic prefix (Cyclic Prefix, CP) added before an OFDM symbol ensures orthogonality in OFDM. A length of the CP (which is referred to as a symbol length of the CP) is usually related to a maximum multipath transmission delay.

When full-duplex is applied to a current cellular mobile communications system, especially a macro cellular mobile communications system, a self-interference/mutual-interference signal is no longer in synchronization with a wanted signal due to simultaneous uplink and downlink transmission in a cell.

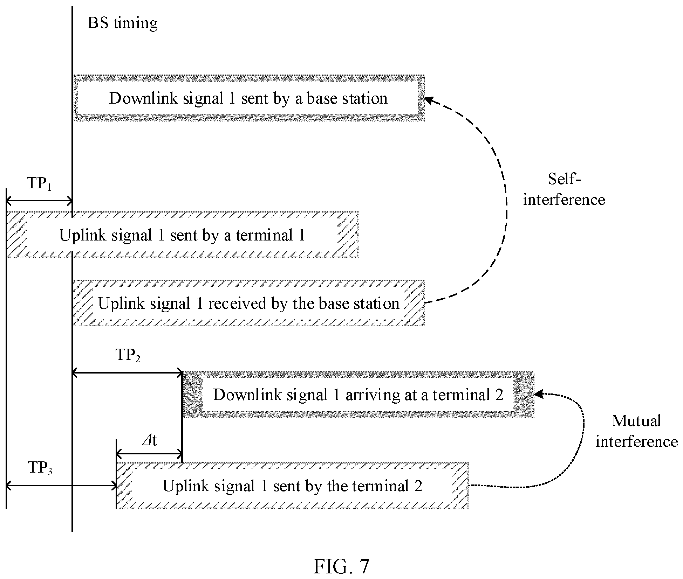

Specifically, for an interference situation in the communications mode shown in FIG. 4, as shown in FIG. 7, the uplink signal 1 sent by the terminal 1 arrives at the base station after TP₁ elapses, to ensure synchronous uplink transmission. That is, when the uplink signal 1 sent by the terminal 1 arrives at the base station, there is timing alignment with the base station. In addition, the downlink signal 1 sent by the base station arrives at the terminal 2 after TP₂ elapses. In this case, a self-interference signal received by the base station, namely, a signal sent by the base station, is in synchronization with a wanted signal. In addition, as described above, there may also be mutual interference in this scenario. That is, the uplink signal 1 arrives at the terminal 2 after TP₃ elapses. However, an uplink propagation delay (namely, TP₃) may be different from a downlink propagation delay (namely, TP₂), and therefore there is a difference Δt between a mutual-interference signal (namely, the uplink signal 1) received by the terminal 2 from the terminal 1 and a wanted signal (namely, the downlink signal 1) received by the terminal 2 from the base station. The delay difference is related to geographical locations of the base station and the terminals:$Δ t = {TP}_{1} + {TP}_{2} - {TP}_{3} = \left({d}_{1}+{d}_{2}-{d}_{3}\right) / c$

Herein, d₁ represents a distance between the base station and the terminal 1, d₂ represents a distance between the base station and the terminal 2, d₃ represents a distance between the terminal 1 and the terminal 2, c represents a speed of light, and c=3*10⁸ m/s. Based on a triangular relationship, it may be determined that Δt≥0. If Δt>0, the mutual-interference signal and the wanted signal are asynchronous.

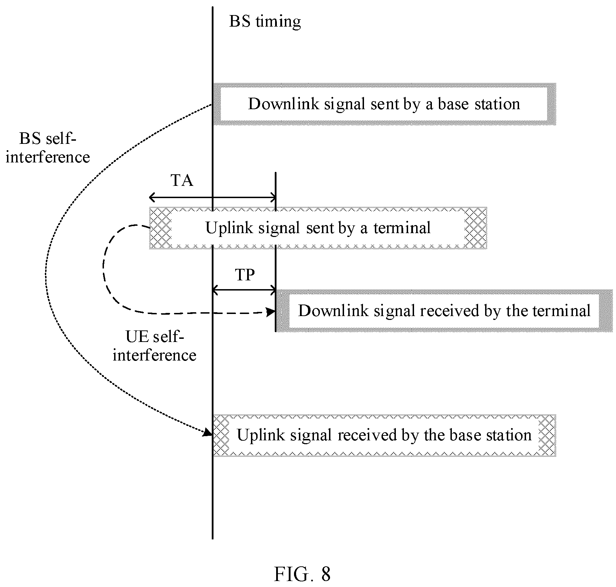

Specifically, for an interference situation in the communications mode shown in FIG. 5, as shown in FIG. 8, the terminal sends an uplink signal to the base station with an advance of TA, to ensure synchronous uplink transmission. When the uplink signal arrives at the base station, there is timing alignment with the base station. In this case, a self-interference signal received by the base station, namely, a downlink signal sent by the base station, is still in synchronization with a wanted signal. However, due to a downlink propagation delay (namely, TP) from the base station to the terminal and an advance (namely, TA) for sending by the terminal, there is a difference TA between a self-interference signal and a wanted signal that are received by the terminal, that is, the self-interference signal and the wanted signal are asynchronous.

These asynchronous features of received signals in the full-duplex system affect channel estimation and subsequent interference cancellation/suppression, which poses a challenge to conventional reference signal design.

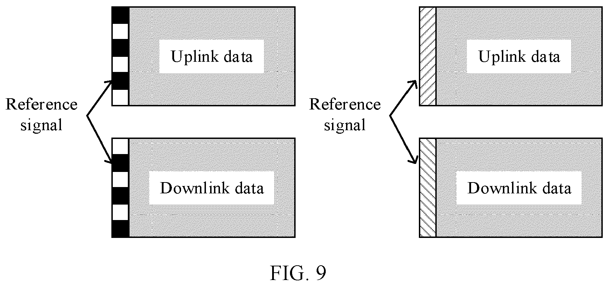

To simultaneously estimate channels of a self-interference signal and a wanted signal, orthogonal reference signals (time-frequency domain or code domain) are allocated for uplink and downlink transmission in an existing technical solution. As shown in FIG. 9, the solution is an extension of a reference signal in a multiple-input multiple-output (Multiple-Input Multiple-Output, MIMO) technology in existing LTE or 5G NR. Uplink and downlink reference signals may be separately placed in frequency domain, or orthogonal uplink and downlink reference sequences, for example, ZC (Zadoff-Chu) or pseudo-noise code (Pseudo-Noise Code, PN code) sequences, may be used.

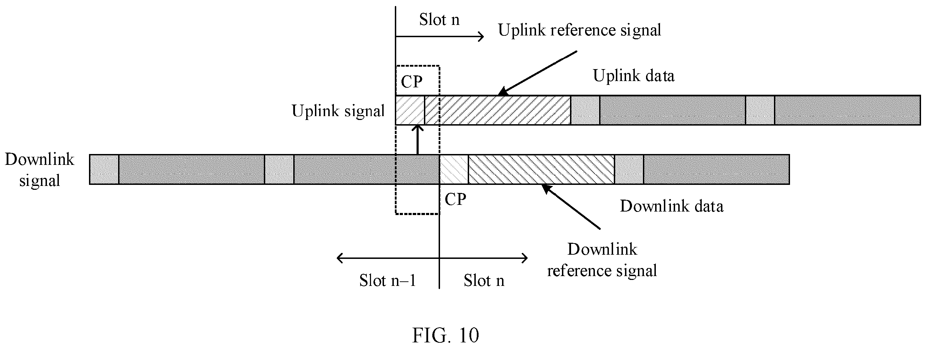

The existing technical solution is designed based on a premise of orthogonality between the uplink and downlink, namely, synchronization between an interference signal and a wanted signal. Orthogonality of the foregoing design can be satisfied only under a condition of synchronization. It may be learned from the foregoing analysis of the full-duplex system that on a terminal side, an interference signal (including a self-interference signal or a mutual-interference signal) and a wanted signal may be asynchronous, as shown in FIG. 10. In this case, downlink data causes interference (in a dashed box in the figure) to an uplink reference signal of a terminal, and consequently channel estimation of the self-interference signal of the terminal is affected. In this case, orthogonality of uplink and downlink reference signals is damaged, and accurate signal estimation cannot be performed, and consequently effective interference cancellation or suppression and data demodulation cannot be performed. It should be noted that for the terminal 1 in FIG. 1, in FIG. 10, an uplink signal may be an uplink signal sent by the terminal 1 to a base station, and a downlink signal is a signal sent by the base station to the terminal 1. That is, in FIG. 10, the uplink signal is a self-interference signal for the downlink signal (wanted signal). Alternatively, in FIG. 10, the uplink signal may be an uplink signal that is sent by a terminal 2 to the base station and that affects the terminal 1, and the downlink signal is a signal sent by the base station to the terminal 1. That is, the uplink signal is a mutual-interference signal for the downlink signal (wanted signal). In addition, a delay difference Δt between an uplink reference signal in a slot n and a downlink reference signal in the slot n shown in FIG. 10 is merely an illustrative example. As described above, an uplink reference signal and a downlink reference signal received on a terminal side are asynchronous due to a distance between a terminal and a base station or between terminals. Therefore, actually, a value of Δt depends on the distance between the terminal and the base station. That is, a longer distance from the base station or between terminals indicates a larger value of Δt. That is, Δt between an uplink reference signal (including an uplink reference signal sent by the terminal or an uplink reference signal received from another terminal) and a downlink reference signal of a cell-edge terminal is the largest.

Therefore, how to improve accuracy of interference channel estimation on a terminal side becomes a problem to be urgently resolved.

The embodiments of this application are intended to adjust relative locations of an uplink reference signal, a downlink reference signal, and data (including uplink data and downlink data) by optimizing a reference signal structure, to avoid overlap, cancel interference, and improve accuracy of estimating an interference channel. It should be noted that the data (including the uplink data and the downlink data) in the embodiments of this application refers to a data part other than a reference signal part on a carrier corresponding to the signal shown in FIG. 10, and may also be referred to as a data symbol. That is, in the technical solutions in the embodiments of this application, an uplink reference signal structure and/or a downlink reference signal structure may be configured, to resolve a problem, in FIG. 10, that an uplink reference signal overlaps downlink data.

With reference to the schematic diagram of the communications system shown in FIG. 1, the following describes specific implementation solutions of this application. It should be noted that in FIG. 1, the base station is in a full-duplex mode, and all the terminals may be in the full-duplex mode, or all the terminals may be in a half-duplex mode, or all the terminals may be in different duplex modes (for example, the terminal 1 is in the full-duplex mode, and the terminal 2 is in a half-duplex mode). When the terminal communicates with the base station, data transmimission is performed in the communications mode shown in FIG. 4 or FIG. 5.

### Scenario 1

With reference to FIG. 1, FIG. 11 is a schematic flowchart of a full-duplex reference signal configuration method according to an embodiment of this application.

Step 101: A terminal may access a base station.

Specifically, in this embodiment of this application, the terminal accesses the base station. Optionally, in this application, the base station may determine a corresponding uplink reference signal structure and a corresponding downlink reference signal structure for the terminal based on a distance or a delay between the terminal and the base station. In this embodiment, in a process in which the terminal accesses the base station, the base station may obtain information about the distance (delay) between the terminal and the base station. In an embodiment, a manner in which the base station obtains the information about the distance from the terminal may be that the terminal sends a reference signal, and the base station may obtain a value of the distance based on information such as a delay of the received reference signal. In another embodiment, a manner in which the base station obtains a value of the distance from the terminal may be that the terminal reports location information of the terminal, and the base station may obtain the value of the distance based on the received location information. The base station may obtain the value of the distance between the base station and the terminal by using any possible implementation. This is not limited in this application.

In addition, for other specific details of accessing the base station by the terminal, for example, an interaction process or a configuration process when the terminal accesses the base station, refer to a technical solution in an embodiment in a conventional technology. Details are not described in this application.

Step 102: The base station determines the uplink reference signal structure and the downlink reference signal structure of the terminal according to a preset rule.

Specifically, in this embodiment of this application, the base station may adjust a length of the uplink reference signal structure and/or a length of the downlink reference signal structure, to avoid overlap between an uplink reference signal and downlink data on a terminal side (when the data overlaps the reference signal, the data causes interference to the reference signal), and ensure that a downlink reference signal and uplink data on a base station side do not overlap. Optionally, in this application, the preset rule may be set on the base station side. The base station may determine the uplink reference signal structure and the downlink reference signal structure based on a correspondence that is between a parameter (the parameter may be a distance parameter or a cell radius parameter) and each of an uplink reference signal structure and a downlink reference signal structure and that is recorded in the preset rule. Subsequently, the base station may configure the downlink reference signal structure, and indicate, by using configuration information, the terminal to configure an uplink reference signal based on the determined uplink reference signal structure (step 103).

In an embodiment, a manner, specified in the preset rule, that is of adjusting the length of the uplink reference signal and/or the length of the downlink reference signal may be: A plurality of consecutive reference signals may be configured in a reference signal (the uplink reference signal and/or the downlink reference signal) structure. Specific details are described in the following scenario.

In another embodiment, a manner, specified in the preset rule, that is of adjusting the length of the uplink reference signal and/or the length of the downlink reference signal may be: A plurality of consecutive blank symbols are configured in a reference signal (the uplink reference signal and/or the downlink reference signal) structure. Specific details are described in the following scenario.

In still another embodiment, a manner, specified in the preset rule, that is of adjusting the length of the uplink reference signal and/or the length of the downlink reference signal may be: At least one reference signal and at least one blank symbol are configured in a reference signal (the uplink reference signal and/or the downlink reference signal) structure. Specific details are described in the following scenario.

In this embodiment of this application, when determining the length of the reference signal (the uplink reference signal and/or the downlink reference signal) structure, the base station may determine a quantity of consecutive reference signals or a quantity of blank symbols in the reference signal structure based on a length of a cell radius of the base station. In other words, a same reference signal structure may be configured for all terminals served by the base station, to overcome self-interference or mutual interference caused by an asynchronous problem that is between an uplink reference signal and a downlink reference signal on a terminal side and that is resulted from a delay difference.

Optionally, in this embodiment of this application, when determining the length of the reference signal structure, the base station may alternatively determine a quantity of consecutive reference signals or a quantity of blank symbols in the reference signal structure based on the distance between the base station and the terminal (namely, the value of the distance that is between the base station and the terminal and that is obtained by the base station in step 101). That is, different reference signal structures may be configured for a plurality of terminals that access the base station. A specific configuration manner is described in detail in the following embodiment.

Optionally, in this embodiment of this application, a same preset rule may be configured for all base stations in a specified region and cells in the base stations. That is, the uplink reference signal structure and the downlink reference signal structure may be directly specified in the preset rule. That is, a same uplink reference signal structure may be configured for all terminals that access a cell in the specified region, and downlink signals sent by the base station to all the terminals have a same downlink reference signal structure. In this embodiment, the reference signal structure in the preset rule may be determined based on a radius of a largest cell in the specified region.

It should be noted that in this embodiment of this application, an uplink reference signal configured by the base station for the terminal is an uplink reference signal sent by the terminal to the base station, or may be an uplink reference signal that is sent by another terminal to the base station and that causes mutual interference to the terminal. That is, for the terminal 1 and the terminal 2 in FIG. 1, if a communications mode between the terminal 1 and the terminal 2 is shown in FIG. 4, the uplink reference signal configured by the terminal based on an indication of the base station in this embodiment of this application is an uplink signal that is sent by the terminal 2 to the base station and that is also received by the terminal 1 from the terminal 2. That is, the base station indicates the terminal 2 to configure the uplink reference signal, so that the uplink reference signal received by the terminal 1 from the terminal 2 does not overlap downlink data received by the terminal 1 from the base station. In another embodiment, if a communications mode of the terminal 1 or the terminal 2 in FIG. 1 is shown in FIG. 5, the uplink reference signal configured by the terminal based on an indication of the base station in this embodiment of this application is an uplink reference signal sent by the terminal 1 to the base station. That is, the base station indicates the terminal 1 to configure the uplink reference signal, so that the uplink reference signal sent by the terminal 1 does not overlap downlink data received by the terminal 1.

Step 103: The base station sends the configuration information to the terminal.

Specifically, in this embodiment of this application, the base station may send the configuration information to the terminal, to indicate the terminal to configure the uplink reference signal structure based on content indicated in the configuration information.

Optionally, the configuration information may be radio resource control (Radio Resource Control, RRC) information. That is, when the base station establishes an RRC connection to the terminal, the base station may complete a process of configuring the downlink reference signal structure and the uplink reference signal structure, and release, to the terminal by using the RRC information, the uplink reference signal structure corresponding to the terminal. Alternatively, the configuration information may be protocol information, for example, medium access control (Medium Access Control, MAC) information. This is not limited in this application.

Step 104: The terminal configures an uplink reference signal based on the configuration information.

Specifically, in this embodiment of this application, the terminal receives the configuration information sent by the base station, and configures the uplink reference signal based on an indication of the configuration information.

Subsequently, the base station and the terminal may communicate with each other based on the configured uplink reference signal structure and downlink reference signal structure. That is, the base station sends a downlink signal that includes the configured downlink reference signal structure to the terminal, and the terminal sends an uplink signal that includes the configured uplink reference signal structure to the base station. In this way, the uplink reference signal structure on the terminal side includes at least one uplink reference signal that does not overlap the downlink data sent by the base station. In a communication process, on the terminal side, there is at least one uplink reference signal that does not overlap the downlink data sent by the base station, that is, there is at least one uplink reference signal that is not interfered with by the downlink data, and therefore the terminal may estimate a self-interference channel or a mutual-interference channel based on the at least one reference signal that is not interfered with, and cancel a self-interference signal or a mutual-interference signal after determining the self-interference channel or the mutual-interference channel. For related technical content of interference cancellation, refer to a method in an embodiment in a conventional technology. Details are not described in this application. The terminal then may estimate a wanted channel. In this case, a wanted signal (namely, a downlink signal) is not affected by self-interference or mutual interference, thereby improving estimation accuracy of the wanted channel.

### Scenario 2

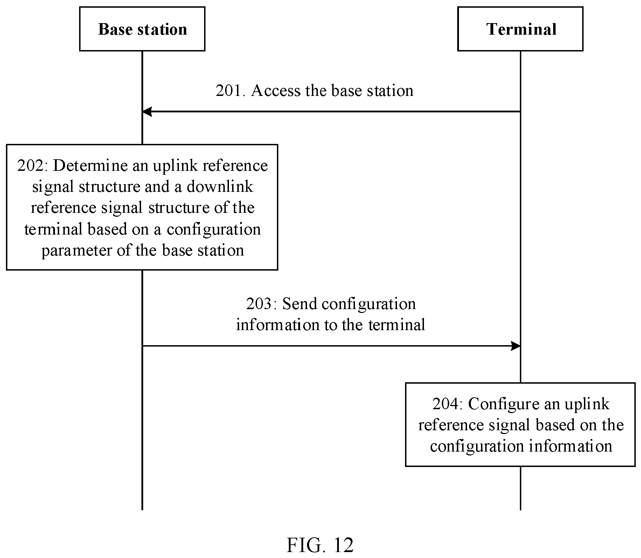

With reference to FIG. 1, FIG. 12 is a schematic flowchart of a full-duplex reference signal configuration method according to an embodiment of this application. In FIG. 12,

Step 201: A terminal accesses a base station.

Step 202: The base station determines an uplink reference signal structure and a downlink reference signal structure based on a configuration parameter of the base station.

Specifically, in this embodiment of this application, a preset rule may include: The base station determines a quantity of uplink reference signals in the uplink reference signal structure and a quantity of downlink reference signals in the downlink reference signal structure based on the configuration parameter of the base station. If the uplink reference signal structure includes two or more uplink reference signals, the plurality of uplink reference signals are consecutive in the uplink reference signal structure. Similarly, if the downlink reference signal structure includes two or more downlink reference signals, the plurality of downlink reference signals are consecutive in the downlink reference signal structure.

Optionally, the configuration parameter of the base station may be a cell radius of the base station. The cell radius is a cell radius corresponding to a cell accessed by the terminal. For example, after the terminal 1 and the terminal 2 in FIG. 1 access a cell in the base station, the base station may determine corresponding uplink reference signal structures for the terminal 1 and the terminal 2 based on a value of the cell radius. In this embodiment, the terminal 1 and the terminal 2 access the same cell, and therefore the terminal 1 and the terminal 2 have a same uplink reference signal structure.

Specifically, the base station may calculate the quantity k of uplink reference signals in the uplink reference signal structure and the quantity q of downlink reference signals in the downlink reference signal structure based on the following formula: $r \leq {T}_{cp} + \left(A-2\right) * {T}_{data} * c / 2 , where k + q = A$ (1) and
r represents the cell radius of the base station, T_{cp} represents a symbol length of a cyclic prefix in the uplink reference signal structure and/or the downlink reference signal structure, T_{data} represents a symbol length of the uplink reference signal or the downlink reference signal, c represents a speed of light (3*10⁸ m/s), and both k and q are integers greater than or equal to 1. It should be noted that in this application, as described in the formula (1), k+q=A, and both k and q are integers greater than or equal to 1. In addition, in this application, when k is equal to 1, q is definitely an integer greater than 1. For example, when A is equal to 3, if k is equal to 1, q is equal to 2. On the contrary, when q is equal to 1, k is definitely an integer greater than 1.

It may be learned, with reference to the formula (1), that a sum of k and q is A. If A is 3, k may be 1, and q is 2, or q may be 1, and k is 2.

Specifically, detailed description is provided by using a frame structure whose subcarrier spacing is 30 kHz and fast Fourier transformation (Fast Fourier Transformation, FFT) size is 2048 as an example. The length T_{cp} of symbols occupied by the CP is about 2.34 µs (144 sampling points), the length T_{data} of symbols occupied by the uplink reference signal or the downlink reference signal (the uplink reference signal or the downlink reference signal in this embodiment of this application may be understood as a data symbol in an uplink reference signal in an embodiment in a conventional technology) is about 33.33 µs (2048 sampling points), and a total length (namely, a sum of the length of the CP and the length of the reference signal) T_{Symbol} of symbols is about 35.68 µs (a result obtained after roundoff). If the cell radius is 5 km, it may be calculated, based on the formula (1), that A is greater than or equal to 3.

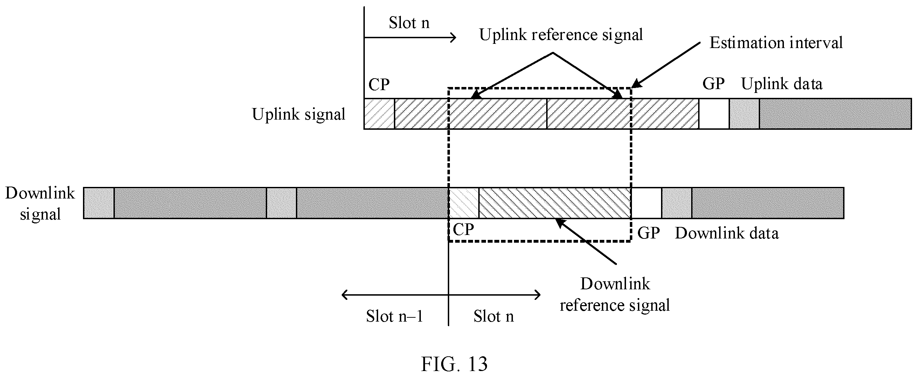

Based on the foregoing result, in an embodiment, the base station may randomly select a value from a value range of A as a value of A. Optionally, the base station may select a minimum value from a value range as a value of A. For example, the value range of A is [3, +∞). In this case, the base station may determine that the value of A is 10, or may determine that the value of A is 3. This is not limited in this application. In this embodiment, for example, the base station determines that the value of A is 3. In this case, k+q=3. In this embodiment, if k is 2, and q is 1, the uplink reference signal structure determined based on the configuration includes two consecutive uplink reference signals, and the downlink reference signal structure includes one downlink reference signal. That is, the base station may configure a plurality of consecutive uplink reference signals in the uplink reference signal structure to increase the length of the uplink reference signal structure, so that there is at least one uplink reference signal that is orthogonal to the downlink reference signal and that does not overlap the downlink data. The reference signal structure is shown in FIG. 13. It should be noted that as described above, an uplink reference signal and a downlink reference signal are asynchronous due to a distance between a terminal and a base station or another terminal, and an asynchronous situation is shown in FIG. 10, that is, there is a delay difference Δt between the uplink reference signal and the downlink reference signal. Therefore, to implement that the configured uplink reference signal structure includes at least one uplink reference signal that is not interfered with by the downlink data, in this embodiment (that is, the uplink reference signal structure includes a plurality of consecutive uplink reference signals, and the downlink reference signal structure includes only one downlink reference signal), it is configured that a repeated uplink reference signal is located after an original uplink reference signal (namely, an uplink reference signal in a slot n). In addition, in this application, a guard period (Guard Period, GP) may be added at the end of the uplink reference signal structure and the downlink reference signal structure.

Specifically, in FIG. 13, an uplink reference signal in an estimation interval (namely, a dashed box in the figure) is an uplink reference signal that is not interfered with by the downlink data. It should be noted that the estimation interval is a manner used by the terminal to estimate the self-interference channel or the mutual-interference channel. That is, the terminal may estimate the self-interference channel or the mutual-interference channel for the uplink reference signal in the estimation interval, and perform interference suppression based on a determined channel result. A length of the estimation interval may be greater than or equal to the length (33.33 µs) of symbols occupied by the reference signal, and a start location of the estimation interval changes with the uplink/downlink reference signal structure. For example, in this embodiment, the uplink reference signal structure includes two consecutive uplink reference signals, and the downlink reference signal structure includes one downlink reference signal. In this case, as shown in FIG. 13, the start location of the estimation interval is the same as a start location of the downlink reference signal structure, and the length of the estimation interval is equal to a sum of a length (33.33 µs) of symbols occupied by one uplink reference signal and the length (2.34 µs) of symbols occupied by the CP.

In conclusion, in this embodiment, the k consecutive uplink reference signals may be configured to increase the length of the uplink reference signal structure, to avoid interference of the downlink data to the uplink reference signal.

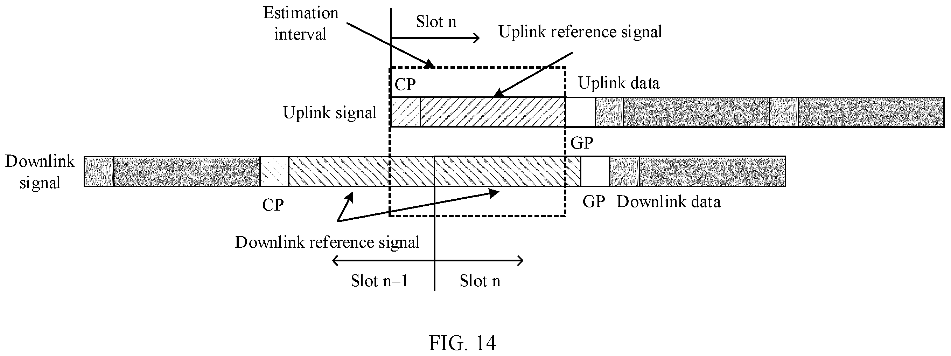

In another embodiment, for example, the value of A is still 3. In this case, the base station may determine that k is 1 and q is 2. That is, the uplink reference signal structure includes one uplink reference signal, and the downlink reference signal structure includes two consecutive downlink reference signals. That is, the base station may configure a plurality of consecutive downlink reference signals in the downlink reference signal structure to increase the length of the downlink reference signal structure, so that there is at least one uplink reference signal that is orthogonal to the downlink reference signal and that does not overlap the downlink data. The reference signal structure is shown in FIG. 14. It should be noted that as described above, an uplink reference signal and a downlink reference signal are asynchronous due to a distance between a terminal and a base station or another terminal, and an asynchronous situation is shown in FIG. 10, that is, there is a delay difference Δt between the uplink reference signal and the downlink reference signal. Therefore, to implement that the configured uplink reference signal structure includes at least one uplink reference signal that is not interfered with by the downlink data, in this embodiment (that is, the uplink reference signal structure includes one uplink reference signal, and the downlink reference signal structure includes a plurality of consecutive downlink reference signals), it is configured that a repeated downlink reference signal is located before an original downlink reference signal (namely, a downlink reference signal in a slot n), that is, the repeated downlink reference signal is a downlink signal in a slot n-1. Specifically, in FIG. 14, an uplink reference signal in an estimation interval (namely, a dashed box in the figure) is an uplink reference signal that is not interfered with by the downlink data. In this embodiment, the uplink reference signal structure includes one uplink reference signal, and the downlink reference signal structure includes two consecutive downlink reference signals. In this case, as shown in FIG. 14, a start location of the estimation interval is the same as a start location of the uplink reference signal structure, and a length of the estimation interval is equal to a sum of a length (33.33 µs) of symbols occupied by one uplink reference signal and the length (2.34 µs) of symbols occupied by the CP.

In conclusion, in this embodiment, the q consecutive downlink reference signals may be configured to increase the length of the downlink reference signal structure, to avoid interference of the downlink data to the uplink reference signal.

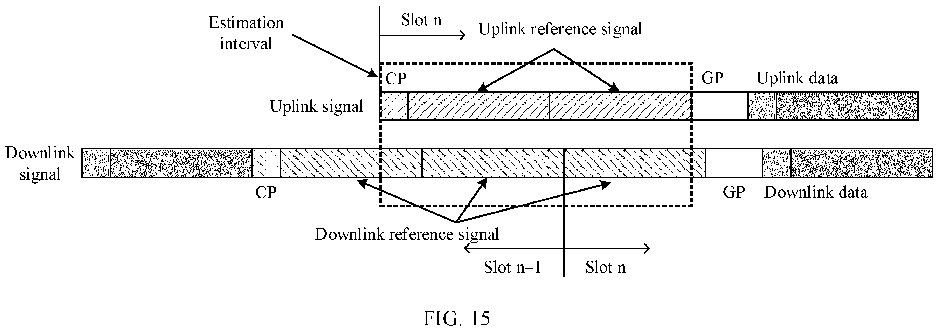

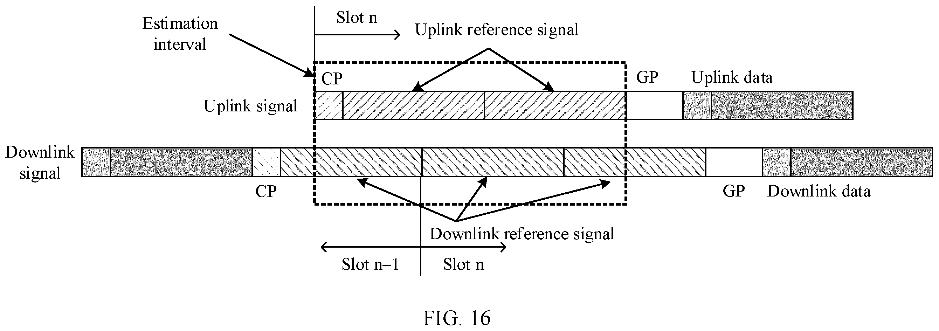

In still another embodiment, for example, the value of A is 5. In this case, the base station may determine that k is 2 and q is 3. That is, the uplink reference signal structure includes two consecutive uplink reference signals, and the downlink reference signal structure includes three consecutive downlink reference signals. That is, the base station may configure a plurality of consecutive uplink reference signals in the uplink reference signal structure to increase the length of the uplink reference signal structure, and configure a plurality of consecutive downlink reference signals in the downlink reference signal structure to increase the length of the downlink reference signal structure, so that there is at least one (as shown in FIG. 15, there are two uplink reference signals in an estimation interval) uplink reference signal that is orthogonal to the downlink reference signal and that does not overlap the downlink data. The reference signal structure is shown in FIG. 15. It should be noted that as described above, an uplink reference signal and a downlink reference signal are asynchronous due to a distance between a terminal and a base station or another terminal, and an asynchronous situation is shown in FIG. 10, that is, there is a delay difference Δt between the uplink reference signal and the downlink reference signal. Therefore, to implement that the configured uplink reference signal structure includes at least one uplink reference signal that is not interfered with by the downlink data, in this embodiment (that is, the uplink reference signal structure includes a plurality of consecutive uplink reference signals, and the downlink reference signal structure includes a plurality of consecutive downlink reference signals), it may be set that a repeated uplink reference signal is after an original uplink reference signal (namely, an uplink reference signal in a slot n), and it is configured that a repeated downlink reference signal is located before an original downlink reference signal (namely, a downlink reference signal in the slot n), that is, the repeated downlink reference signal is a downlink signal in a slot n-1. Specifically, in FIG. 15, an uplink reference signal in the estimation interval (namely, a dashed box in the figure) is an uplink reference signal that is not interfered with by the downlink data. In this embodiment, the uplink reference signal structure includes two consecutive uplink reference signals, and the downlink reference signal structure includes three consecutive downlink reference signals. In this case, as shown in FIG. 15, a start location of the estimation interval is the same as a start location of the uplink reference signal structure, and a length of the estimation interval is equal to a sum of a length (33.33 µs) of symbols occupied by one uplink reference signal and the length (2.34 µs) of symbols occupied by the CP. Optionally, FIG. 16 shows another configuration manner when k is 2 and q is 3. In FIG. 16, it is configured that a repeated uplink reference signal is located after an original uplink reference signal and repeated downlink reference signals are respectively located before and after an original downlink reference signal. It is clear that, as shown in FIG. 16, there are two uplink reference signals that do not overlap the downlink data in an estimation interval. When the terminal estimates an interference channel, estimation accuracy of the interference channel can be effectively improved. Therefore, when the uplink reference signal structure and/or the downlink reference signal structure include/includes a plurality of consecutive reference signals, locations of the consecutive reference signals may be set based on the delay difference Δt between the uplink reference signal and the downlink reference signal. That is, while it is ensured that there is at least one uplink reference signal that does not overlap the downlink data, locations of consecutively repeated uplink reference signals or downlink reference signals may be adjusted to increase a quantity of uplink reference signals that do not overlap the downlink data, thereby improving accuracy of channel estimation.

In conclusion, in this embodiment, the k consecutive uplink reference signals may be configured to increase the length of the uplink reference signal structure, and the q consecutive downlink reference signals may be configured to increase the length of the downlink reference signal structure, to avoid interference of the downlink data to the uplink reference signal.

It should be noted that in this embodiment, calculation results of k and q may be determined in a cell initialization process. That is, after determining the value range of A, the base station may determine the value of A in a satisfying interval, and randomly select values of k and q based on the determined value of A. Alternatively, the base station may determine values of k and q based on a current resource load status. For example, if downlink resource scheduling load is excessively heavy, the base station may adaptively increase the value of k and decrease the value of q, to dynamically adjust the uplink/downlink reference signal structure.

Optionally, in this embodiment, the preset rule may be set on a base station side. That is, after determining the uplink reference signal structure and the downlink reference signal structure based on the cell radius corresponding to the cell accessed by the terminal, the base station performs step 203, that is, the base station notifies the terminal of the uplink reference signal structure configured for the terminal. Optionally, the preset rule may alternatively be set on a base station side and the terminal side. That is, the base station may determine the corresponding uplink reference signal structure and the corresponding downlink reference signal structure based on the cell radius, and the terminal may also obtain the cell radius of the base station in an access process, and determine the corresponding uplink reference signal structure and the corresponding downlink reference signal structure. In this case, in this embodiment, the base station does not need to send configuration information to the terminal, and the base station and the terminal may configure the uplink reference signal structure and the downlink reference signal structure based on an agreement.

It should be noted that in this application, the uplink reference signal structure includes only one CP and one GP (there may be no GP), and the downlink reference signal structure includes only one CP and one GP.

Step 203: The base station sends the configuration information to the terminal.

For specific details, refer to step 103. Details are not described herein again.

Step 204: The terminal configures an uplink reference signal based on the configuration information.

For specific details, refer to step 104. Details are not described herein again.

### Scenario 3

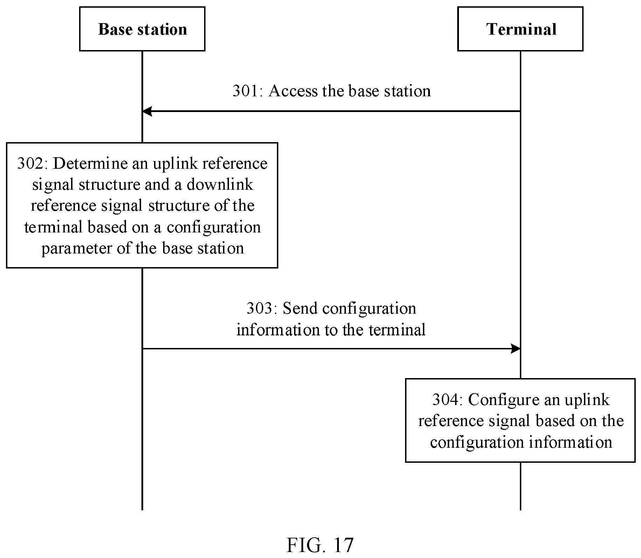

With reference to FIG. 1, FIG. 17 is a schematic flowchart of a full-duplex reference signal configuration method according to an embodiment of this application. In FIG. 17,

Step 301: A terminal accesses a base station.

Step 302: The base station determines an uplink reference signal structure and a downlink reference signal structure based on a configuration parameter of the base station.

Specifically, in this embodiment of this application, a preset rule may include: The base station determines, based on the configuration parameter of the base station, a quantity of blank symbols included in the uplink reference signal structure and/or a quantity of blank symbols included in the downlink reference signal structure. Optionally, if the uplink reference signal structure includes two or more blank symbols, the plurality of blank symbols are consecutive in the uplink reference signal structure. Similarly, if the downlink reference signal structure includes two or more blank symbols, the plurality of blank symbols are consecutive in the downlink reference signal structure.

Optionally, the configuration parameter of the base station may be a cell radius of the base station. The cell radius is a cell radius corresponding to a cell accessed by the terminal. For example, after the terminal 1 and the terminal 2 in FIG. 1 access a cell in the base station, the base station may determine corresponding uplink reference signal structures for the terminal 1 and the terminal 2 based on a value of the cell radius. In this embodiment, the terminal 1 and the terminal 2 access the same cell, and therefore the terminal 1 and the terminal 2 have a same uplink reference signal structure.

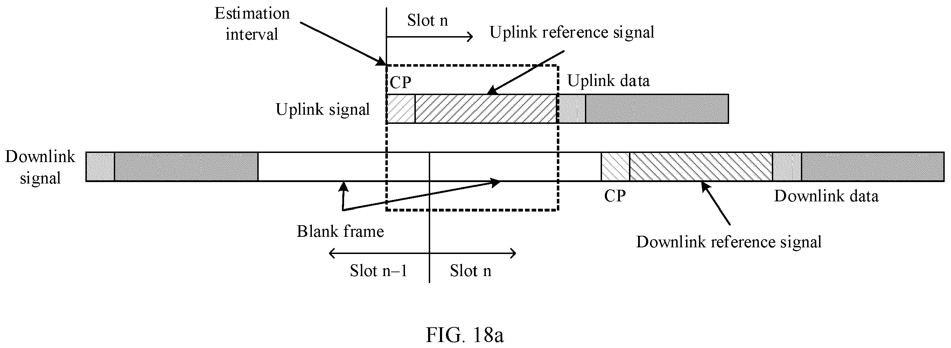

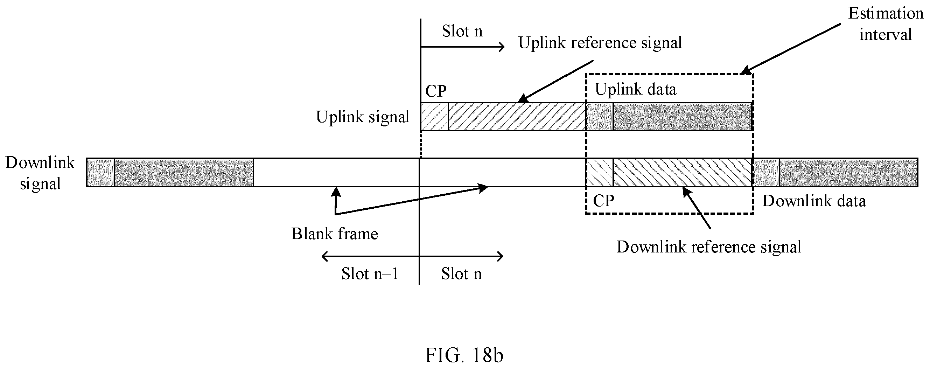

Specifically, in this embodiment of this application, when the blank symbol is used in the uplink reference signal structure and the downlink reference signal structure, it is further specified in the preset rule that the uplink reference signal structure includes at least one uplink reference signal that does not overlap downlink data and that does not overlap the downlink reference signal, namely, an uplink reference signal that overlaps only the blank symbol, which is different from a case in which the uplink reference signal is orthogonal to the downlink reference signal in scenario 2. It should be noted that in some embodiments, a location of the reference signal (the uplink reference signal and/or the downlink reference signal) on a time domain resource is changed after the blank symbol is added. Therefore, in a formulation principle of the preset rule, it further needs to be considered that a downlink reference signal on a base station side overlaps neither uplink data nor the uplink reference signal, that is, the downlink reference signal overlaps only the blank symbol. For example, if the uplink reference signal structure and the downlink reference signal structure on a terminal side are shown in FIG. 18a, an uplink reference signal structure and a downlink reference signal structure on the base station side are shown in FIG. 18b. It is clear that, on the terminal side, the uplink reference signal structure includes one uplink reference signal that is not interfered with. However, on the base station side, the downlink reference signal overlaps the uplink data, and consequently estimation of a self-interference channel (namely, interference of a downlink signal sent by the base station) by the base station is affected. Therefore, as described above, in this embodiment of this application, when determining, based on configuration information, a quantity of blank symbols to be added, the base station further needs to determine a location of the blank symbol to be added, to ensure that there is at least downlink reference signal that is not affected by interference on the base station side while it is ensured that there is at least one uplink reference signal that is not affected by interference on the terminal side.

The following describes, by using examples, different manners of configuring the blank symbol.

Optionally, the base station may calculate a quantity n of downlink blank symbols signals in the downlink reference signal structure based on the following formula:$n \geq 2 * r / \left(c*\left({T}_{cp}+{T}_{data}\right)\right)$ (2)

Herein, r represents the cell radius of the base station, T_{cp} represents a symbol length of a cyclic prefix in the uplink reference signal structure and/or the downlink reference signal structure, T_{data} represents a symbol length of the uplink reference signal or the downlink reference signal, c represents a speed of light (3*10⁸ m/s), and n is an integer greater than 1. The quantity m of blank symbols in the uplink reference signal structure is an integer greater than or equal to 1.

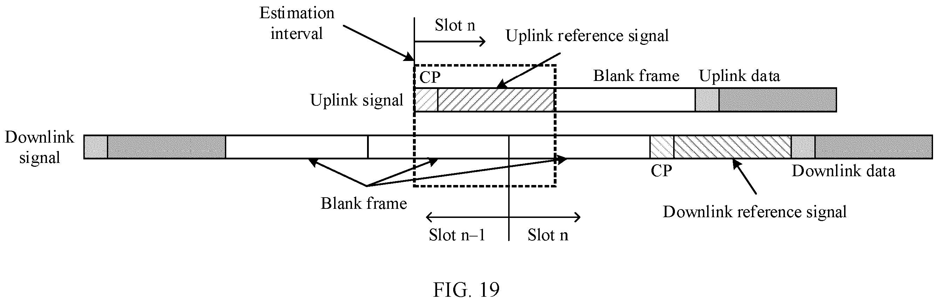

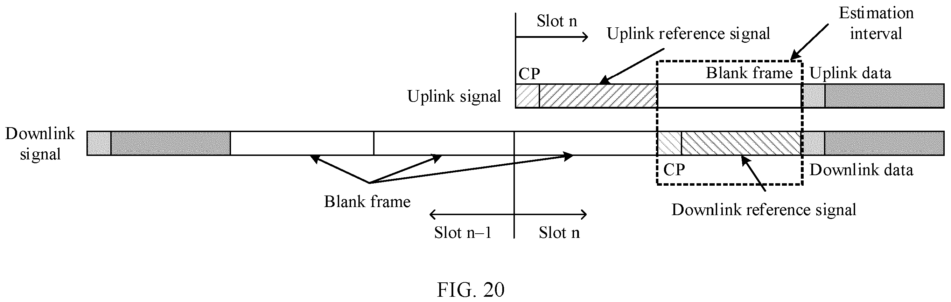

Optionally, in this application, m consecutive blank symbols may be configured in the uplink reference signal structure, the m consecutive blank symbols are located after the uplink reference signal, where m is an integer greater than or equal to 1, and the m consecutive blank symbols are set, to ensure that the downlink reference signal on the base station side is not interfered with. Correspondingly, n consecutive blank symbols may be configured in the downlink reference signal structure, and a value of n may be determined based on the formula (2). For example, the value of n may be a minimum value in a value range, or the value of n may be any value in a value range. The value of n may be determined based on an actual requirement, for example, resource utilization. This is not limited in this application. As shown in FIG. 19, the uplink reference signal structure includes one blank symbol, and the downlink reference signal structure includes three consecutive blank symbols. The three consecutive blank symbols are located before the downlink reference signal. One blank symbol is located in a slot n, and the other two blank symbols are located in a slot n-1. A function of the blank symbol in the slot n in the downlink reference signal structure is shown in FIG. 20. In FIG. 20, on the base station side, as described above, an uplink reference signal corresponding to the slot n is in synchronization, namely, timing alignment, with a downlink reference signal. Therefore, the blank symbol in the slot n is used to adjust a location of the downlink reference signal, to align with (or may be understood as "to overlap") the blank symbol in the uplink reference signal structure, to prevent the uplink data or some uplink reference signals (it should be noted that if some uplink reference signals and some blank symbols overlap the downlink reference signal, an estimation result of the interference channel is also affected) from interfering with the downlink reference signal.

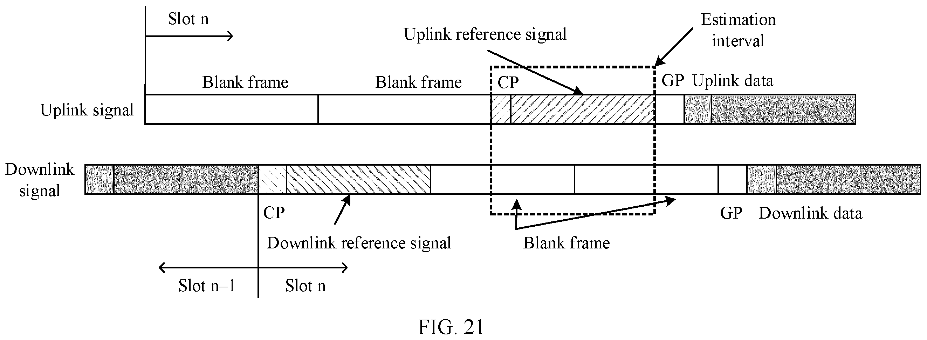

Optionally, in this application, the blank symbol may be added in a manner shown in FIG. 21. That is, in FIG. 21, the blank symbol in the uplink reference signal structure is located before the uplink reference signal, and the blank symbol in the downlink reference signal structure is located after the downlink reference signal.

It should be noted that the manner of setting the blank symbol (including a location and a quantity of blank symbols in the reference signal structure) in this embodiment of this application is an illustrative example. For example, the blank symbol may be set before or after the uplink reference signal, to adjust a location of the uplink reference signal in the uplink reference signal structure and a length of the uplink reference signal structure. In addition, based on adjustment of the uplink reference signal structure, a corresponding blank symbol may be correspondingly added to the downlink reference signal structure, to adjust a length of the downlink reference signal structure and a location of the downlink reference signal in the downlink reference signal structure. That is, while it is ensured that the uplink reference signal on the terminal side does not overlap the downlink data or some downlink reference signals (that is, the entire uplink reference signal (including 33.33 µs) may be completely orthogonal to the downlink reference signal by adding the blank symbol), setting is performed based on an actual requirement (for example, a delay difference or resource utilization).

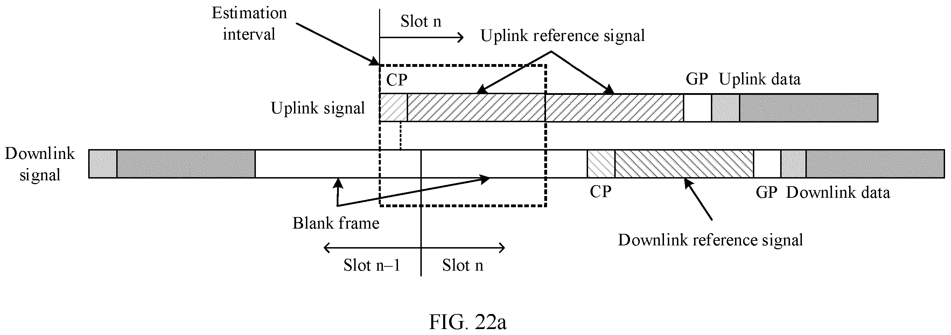

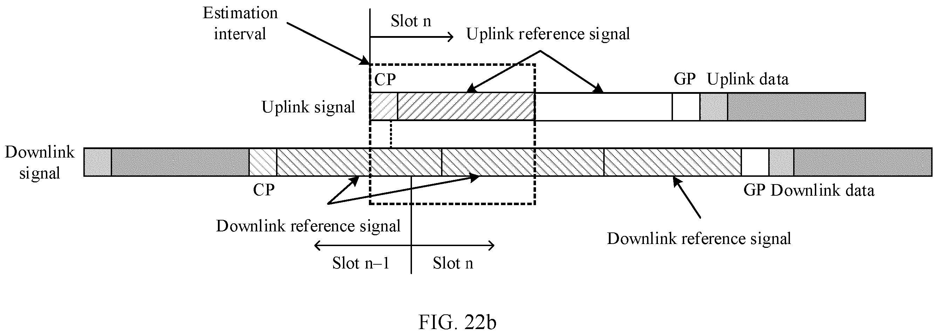

In addition, in a possible implementation, the reference signal configuration manner in scenario 2, namely, a manner of configuring a repeated reference signal to adjust the length of the reference signal structure, may be used in combination with the reference signal configuration manner in scenario 3, namely, a manner of configuring a blank symbol to adjust the length of the reference signal structure. FIG. 22a shows a possible implementation. In FIG. 22a, the uplink reference signal structure includes a plurality of consecutive uplink reference signals, and correspondingly, the downlink reference signal structure includes the downlink reference signal and at least one blank symbol (the at least one blank symbol may be consecutive or inconsecutive). FIG. 22b shows another possible implementation. In FIG. 22b, the uplink reference signal structure includes at least one blank symbol (the at least one blank symbol may be consecutive or inconsecutive), and the downlink reference signal structure includes a plurality of consecutive downlink reference signals. It should be noted that the reference signal structures shown in FIG. 22a and FIG. 22b are also illustrative examples. That is, in this embodiment of this application, a method for combining the manner of configuring a blank symbol and the manner of configuring a repeated reference signal may be that a repeated uplink reference signal and/or the blank symbol are/is used in the uplink reference signal structure, and the blank symbol and/or a repeated downlink reference signal are/is used in the corresponding downlink reference signal structure. A configuration principle is to ensure that the uplink reference signal on the terminal side is not affected by interference (does not overlap the downlink data) and the downlink reference signal on the base station side is not affected by interference (does not overlap the uplink data).

Step 303: The base station sends the configuration information to the terminal.

For specific details, refer to step 103. Details are not described herein again.

Step 304: The terminal configures an uplink reference signal based on the configuration information.

For specific details, refer to step 104. Details are not described herein again.

### Scenario 4

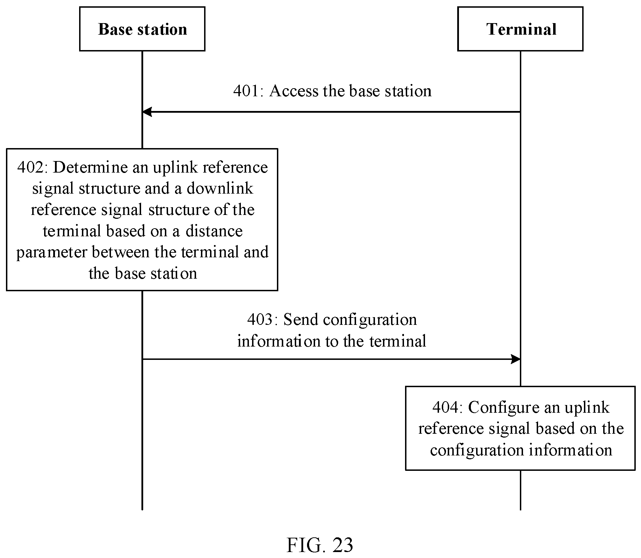

With reference to FIG. 1, FIG. 23 is a schematic flowchart of a full-duplex reference signal configuration method according to an embodiment of this application. In FIG. 23,

Step 401: A terminal accesses a base station.

Step 402: The base station determines an uplink reference signal structure and a downlink reference signal structure based on a distance parameter between the terminal and the base station.

Specifically, in this embodiment of this application, a preset rule may include: The base station determines a quantity of uplink reference signals in the uplink reference signal structure and a quantity of downlink reference signals in the downlink reference signal structure based on the distance parameter between the terminal and the base station. If the uplink reference signal structure includes two or more uplink reference signals, the plurality of uplink reference signals are consecutive in the uplink reference signal structure. Similarly, if the downlink reference signal structure includes two or more downlink reference signals, the plurality of downlink reference signals are consecutive in the downlink reference signal structure.

Optionally, in the communications mode shown in FIG. 5, both the base station and the terminal work in a full-duplex mode, and both the base station and the terminal are affected by self-interference. In this communications mode, the base station may calculate the quantity k of uplink reference signals in the uplink reference signal structure and the quantity q of downlink reference signals in the downlink reference signal structure based on the following formula: $d \leq {T}_{cp} + \left(A-2\right) * {T}_{data} * c / 2 , where k + q = A$ and
d represents a distance between the base station and the terminal in FIG. 5, T_{cp} represents a symbol length of a cyclic prefix in the uplink reference signal structure and/or the downlink reference signal structure, T_{data} represents a symbol length of the uplink reference signal or the downlink reference signal, c represents a speed of light (3*10⁸ m/s), and both k and q are integers greater than or equal to 1.

For a manner of determining, by the base station, k and q based on the formula, refer to scenario 2. Details are not described herein again.

Optionally, in the communications mode shown in FIG. 4, the base station works in a full-duplex mode, and the terminal works in a half-duplex mode. Alternatively, the terminal may be a full-duplex terminal, and when the terminal communicates with the base station, the communications mode shown in FIG. 4 is used. In this communications mode, the base station may calculate the quantity k of uplink reference signals in the uplink reference signal structure and the quantity q of downlink reference signals in the downlink reference signal structure based on the following formula: $D \leq {T}_{cp} + \left(A-2\right) * {T}_{data} * c / 2 , where k + q = A$ and
D=d₁+d₂-d₃, d₁ represents a distance between the base station and a terminal 1, d₂ represents a distance between the base station and a terminal 2, d₃ represents a distance between the terminal 1 and the terminal 2, T_{cp} represents a symbol length of a cyclic prefix in the uplink reference signal structure and/or the downlink reference signal structure, T_{data} represents a symbol length of the uplink reference signal or the downlink reference signal, c represents a speed of light (3*10⁸ m/s), and both k and q are integers greater than or equal to 1.

For a manner of determining, by the base station, k and q based on the formula, refer to scenario 2. Details are not described herein again.

Step 403: The base station sends configuration information to the terminal.

Step 404: The terminal configures an uplink reference signal based on the configuration information.

In conclusion, in this application, the base station may adjust a quantity of repeated reference signals in the reference signal structure based on a delay difference corresponding to the terminal (for example, a terminal that is farther from the base station corresponds to a larger delay difference between an uplink signal and a downlink signal), to adjust a length of the reference signal structure. In this way, resource utilization is effectively improved while interference channel estimation is improved.

### Scenario 5

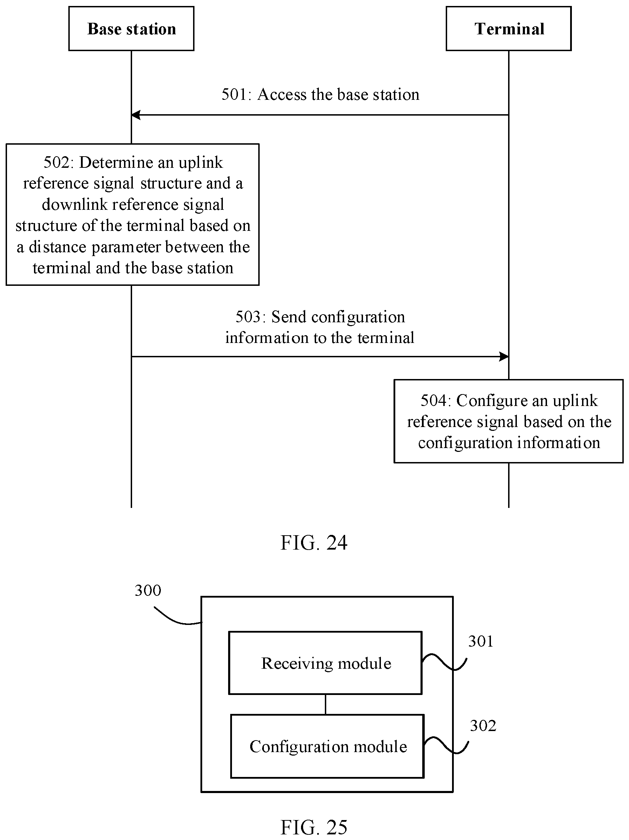

With reference to FIG. 1, FIG. 24 is a schematic flowchart of a full-duplex reference signal configuration method according to an embodiment of this application. In FIG. 24,

Step 501: A terminal accesses a base station.

Step 502: The base station determines an uplink reference signal structure and a downlink reference signal structure based on a distance parameter between the terminal and the base station.

Specifically, in this embodiment of this application, a preset rule may include: The base station determines, based on the distance parameter between the terminal and the base station, a quantity of blank symbols included in the uplink reference signal structure and/or a quantity of blank symbols included in the downlink reference signal structure. Optionally, if the uplink reference signal structure includes two or more blank symbols, the plurality of blank symbols are consecutive in the uplink reference signal structure. Similarly, if the downlink reference signal structure includes two or more blank symbols, the plurality of blank symbols are consecutive in the downlink reference signal structure.

Optionally, in the communications mode shown in FIG. 5, both the base station and the terminal work in a full-duplex mode, and both the base station and the terminal are affected by self-interference. In this communications mode, the base station may calculate a quantity k of uplink reference signals in the uplink reference signal structure and a quantity q of downlink reference signals in the downlink reference signal structure based on the following formula: $n \geq 2 * d / \left(c*\left({T}_{cp}+{T}_{data}\right)\right)$ (5)

Herein, d represents a distance between the base station and the terminal in FIG. 5, T_{cp} represents a symbol length of a cyclic prefix in the uplink reference signal structure and/or the downlink reference signal structure, T_{data} represents a symbol length of the uplink reference signal or the downlink reference signal, c represents a speed of light (3*10⁸ m/s), and both k and q are integers greater than or equal to 1.

For a manner of determining, by the base station, k and q based on the formula, refer to scenario 2. Details are not described herein again.

Optionally, in the communications mode shown in FIG. 4, the base station works in a full-duplex mode, and the terminal works in a half-duplex mode. Alternatively, the terminal may be a full-duplex terminal, and when the terminal communicates with the base station, the communications mode shown in FIG. 4 is used. In this communications mode, the base station may calculate a quantity k of uplink reference signals in the uplink reference signal structure and a quantity q of downlink reference signals in the downlink reference signal structure based on the following formula: $n \geq 2 * D / \left(c*\left({T}_{cp}+{T}_{data}\right)\right)$ (5)

Herein, D=d₁+d₂-d₃, d₁ represents a distance between the base station and a terminal 1, d₂ represents a distance between the base station and a terminal 2, d₃ represents a distance between the terminal 1 and the terminal 2, T_{cp} represents a symbol length of a cyclic prefix in the uplink reference signal structure and/or the downlink reference signal structure, T_{data} represents a symbol length of the uplink reference signal or the downlink reference signal, c represents a speed of light (3*10⁸ m/s), and both k and q are integers greater than or equal to 1.

For a manner of determining, by the base station, k and q based on the formula, refer to scenario 2. Details are not described herein again.

Step 503: The base station sends configuration information to the terminal.

Step 504: The terminal configures an uplink reference signal based on the configuration information.

In conclusion, in this application, the base station may adjust a quantity and a location of blank symbols in the reference signal structure based on a delay difference corresponding to the terminal (for example, a terminal that is farther from the base station corresponds to a larger delay difference between an uplink signal and a downlink signal), to adjust a length of the reference signal structure and a location of a reference signal in the reference signal structure. In this way, resource utilization is effectively improved while interference channel estimation is improved.

Optionally, in this application, the configuration manners in scenario 4 and scenario 5 may also be combined. For specific details, refer to the corresponding description in FIG. 22a and FIG. 22b in scenario 3. Details are not described herein again.

The foregoing mainly describes the solutions provided in the embodiments of this application from a perspective of interaction between network elements. It may be understood that, to implement the foregoing functions, the base station or the terminal includes corresponding hardware structures and/or software modules for performing the functions. A person skilled in the art should be easily aware that, in combination with the units and the algorithm steps in the examples described in the embodiments disclosed in this specification, the embodiments of this application may be implemented by hardware or a combination of hardware and computer software. Whether a function is performed by hardware or hardware driven by computer software depends on particular applications and design constraints of the technical solutions. The person skilled in the art may use different methods to implement the described functions for each particular application, but it should not be considered that the implementation goes beyond the scope of this application.

In the embodiments of this application, division into the functional modules of the base station or the terminal may be performed based on the foregoing method examples. For example, each functional module may be obtained through division based on a corresponding function, or two or more functions may be integrated into one processing module. The foregoing integrated module may be implemented in a form of hardware, or may be implemented in a form of a software functional module. It should be noted that, in the embodiments of this application, the division into the modules is an example, and is merely a logical function division. In actual implementation, another division manner may be used.

When each functional module is obtained through division based on a corresponding function, FIG. 25 is a possible schematic structural diagram of a terminal 300 related to the foregoing embodiments. As shown in FIG. 25, the terminal 300 may include a receiving module 301 and a configuration module 302. The receiving module 301 may be configured to perform the step of "receiving configuration information". For example, the module may be configured to support the terminal in performing step 104, step 204, step 304, step 404, and step 504 in the foregoing method embodiments. The configuration module 302 may be configured to perform the step of "configuring an uplink reference signal based on the received configuration information". For example, the module may be configured to support the terminal in performing step 104, step 204, step 304, step 404, and step 504 in the foregoing method embodiments.

FIG. 26 is a possible schematic structural diagram of a base station 400 in the foregoing embodiments. As shown in FIG. 26, the base station may include a determining module 401, a configuration module 402, and a sending module 403. The determining module 401 may be configured to perform the step of "determining an uplink reference signal structure of a terminal according to a preset rule". For example, the module may be configured to support the base station in performing related steps of step 102 in the foregoing method embodiments. The configuration module 402 may be configured to perform the step of "configuring a downlink reference signal structure according to the preset rule". For example, the module may be configured to support the base station in performing step 102, step 202, step 302, step 402, and step 502 in the foregoing method embodiments. The sending module 403 may be configured to perform the step of "sending configuration information to the terminal". For example, the module may be configured to support the base station in performing step 103, step 203, step 303, step 403, and step 503 in the foregoing method embodiments.

The following describes an apparatus provided in an embodiment of this application, as shown in FIG. 27.

The apparatus includes a processing module 501 and a communications module 502. Optionally, the apparatus further includes a storage module 503. The processing module 501, the communications module 502, and the storage module 503 are connected by using a communications bus.

The communications module 502 may be an apparatus having receiving and sending functions, and is configured to communicate with another network device or a communications network.

The storage module 503 may include one or more memories. The memory may be a component configured to store a program or data in one or more devices or circuits.

The storage module 503 may exist independently, and is connected to the processing module 501 by using a communications bus. The storage module may alternatively be integrated with the processing module 501.

The apparatus 500 may be used in a network device, a circuit, a hardware component, or a chip.

The apparatus 500 may be a terminal in the embodiments of this application, for example, a terminal 1 or a terminal 2. A schematic diagram of the terminal may be shown in FIG. 2b. Optionally, the communications module 502 of the apparatus 500 may include an antenna and a transceiver of the terminal, for example, the antenna 104 and the transceiver 102 in FIG. 2b. Optionally, the communications module 502 may further include an output device and an input device, for example, the output device 1214 and the input device 1215 in FIG. 2b.

The apparatus 500 may be a chip in the terminal in the embodiments of this application. The communications module 502 may be an input or output interface, a pin, a processing circuit, or the like. Optionally, the storage module may store a computer-executable instruction in a method on a terminal side, so that the processing module 501 performs the method on the terminal side in the foregoing embodiments. The storage module 503 may be a register, a cache, a RAM, or the like. The storage module 503 may be integrated with the processing module 501. The storage module 503 may be a ROM or another type of static storage device that can store static information and an instruction. The storage module 503 may be independent of the processing module 501. Optionally, with development of wireless communications technologies, a transceiver may be integrated into the apparatus 500. For example, the transceiver 202 is integrated into the communications module 502.

When the apparatus 500 is the terminal or a chip in the terminal in the embodiments of this application, the apparatus 500 may perform the method performed by the terminal in the foregoing embodiments. The apparatus 500 may be the base station in the embodiments of this application. A schematic diagram of the base station may be shown in FIG. 2a. Optionally, the communications module 502 of the apparatus 500 may include an antenna and a transceiver of the base station, for example, the antenna 105 and the transceiver 103 in FIG. 2a. The communications module 502 may further include a network interface of the base station, for example, the network interface 104 in FIG. 2a.

The apparatus 500 may be a chip in the base station in the embodiments of this application. The communications module 502 may be an input or output interface, a pin, a processing circuit, or the like. Optionally, the storage module may store a computer-executable instruction in a method on a base station side, so that the processing module 501 performs the method on the base station side in the foregoing embodiments. The storage module 503 may be a register, a cache, a RAM, or the like. The storage module 503 may be integrated with the processing module 501. The storage module 503 may be a ROM or another type of static storage device that can store static information and an instruction. The storage module 503 may be independent of the processing module 501. Optionally, with development of wireless communications technologies, a transceiver may be integrated into the apparatus 500. For example, the transceiver 103 and the network interface 104 are integrated into the communications module 502.

When the apparatus 500 is the base station or a chip in the base station in the embodiments of this application, the method performed by the base station in the foregoing embodiments can be performed. An embodiment of this application further provides a computer-readable storage medium. All or some of the methods described in the foregoing embodiments may be performed by using software, hardware, firmware, or any combination thereof. If the methods are performed in software, functions used as one or more instructions or code may be stored in or transmitted on the computer-readable medium. The computer-readable medium may include a computer storage medium and a communications medium, and may further include any medium that can transfer a computer program from one place to another. The storage medium may be any available medium accessible to a computer.

In an optional design, the computer-readable medium may include a RAM, a ROM, an EEPROM, a CD-ROM or another optical disc storage, a magnetic disk storage or another magnetic storage device, or any other medium that can be configured to carry or store required program code in a form of an instruction or a data structure and that may be accessed by the computer. In addition, any connection is appropriately referred to as a computer-readable medium. For example, if a coaxial cable, an optical fiber cable, a twisted pair, a digital subscriber line (DSL), or wireless technologies (such as infrared, radio, and a microwave) are used to send software from a website, a server, or another remote source, the coaxial cable, the optical fiber cable, the twisted pair, the DSL, or the wireless technologies such as infrared, radio, and a microwave are included in a definition of the medium. Magnetic disks and optical discs used in this specification include a compact disk (CD), a laser disk, an optical disc, a digital versatile disc (DVD), a floppy disk, and a Blu-ray disc. The magnetic disks usually magnetically reproduce data, and the optical discs optically reproduce data by using laser light. The foregoing combinations shall also be included within the scope of the computer-readable medium.

An embodiment of this application further provides a computer program product. All or some of the methods described in the foregoing embodiments may be performed by using software, hardware, firmware, or any combination thereof. When the methods are performed in software, all or some of the methods may be performed in a form of a computer program product. The computer program product includes one or more computer instructions. When the foregoing computer program instruction is loaded and executed on a computer, all or some of the procedures or functions described in the foregoing method embodiments are generated. The foregoing computer may be a general-purpose computer, a dedicated computer, a computer network, a network device, user equipment, or another programmable apparatus.

## Claims

1. A full-duplex reference signal configuration method, wherein the method is applied to a terminal and comprises:
receiving (103) configuration information; and
configuring (104) an uplink reference signal based on the configuration information, wherein
the configuration information is received by the terminal from a base station after the base station determines an uplink reference signal structure and a downlink reference signal structure of the terminal according to a preset rule; and
the uplink reference signal structure comprises at least one uplink reference signal that does not overlap downlink data received from the base station;
**characterized in that** the preset rule comprises, at least:
the uplink signal reference structure comprises the uplink reference signal and m blank symbols, and the downlink reference signal structure comprises the downlink reference signal and n blank symbols, wherein
m is an integer greater than or equal to 1, and n is an integer greater than m.

2. The method according to claim 1, wherein the preset rule comprises additionally, at least:
the uplink reference signal structure comprises k uplink reference signals, wherein k is an integer greater than 1; and/or
the downlink reference signal structure comprises q downlink reference signals, wherein q is an integer greater than 1.

3. The method according to claim 2, wherein the preset rule comprises additionally, at least:
determining a value of k based on a configuration parameter of the base station, wherein
the configuration parameter is used to indicate a cell radius of the base station.

4. The method according to claim 2, wherein the preset rule comprises additionally, at least:
determining a value of k based on a distance parameter between the terminal and the base station.

5. The method according to claim 2, wherein the preset rule comprises additionally, at least:
determining a value of q based on a configuration parameter of the base station, wherein
the configuration parameter is used to indicate a cell radius of the base station.

6. The method according to claim 2, wherein the preset rule comprises additionally, at least:
determining a value of q based on a distance parameter between the terminal and the base station.

7. The method according to any one of claims 2 to 6, wherein
the k uplink reference signals are consecutive in the uplink reference signal structure, and
the q downlink reference signals are consecutive in the downlink reference signal structure.

8. The method according to any one of claims 2 to 7, wherein
the at least one uplink reference signal is orthogonal to the downlink reference signal in the downlink reference signal structure.

9. The method according to claim 2, wherein a value of k and a value of q satisfy the following formula: $r \leq {T}_{cp} + \left(A-2\right) * {T}_{data} * c / 2 , wherein k + q = A ;$ and
r represents a distance between the terminal and the base station or a cell radius of the base station, T_{cp} represents a symbol length of a cyclic prefix in the uplink reference signal structure and/or the downlink reference signal structure, T_{data} represents a symbol length of the uplink reference signal or the downlink reference signal, and c represents a speed of light.

10. The method according to any one of claims 1 to 9, wherein the preset rule comprises additionally, at least:
determining a value of m and a value of n based on the configuration parameter of the base station, wherein
the configuration parameter is used to indicate a cell radius of the base station.

11. The method according to any one of claims 1 to 9, wherein the preset rule comprises additionally, at least:
determining a value of m and a value of n based on a distance parameter between the terminal and the base station.

12. A full-duplex reference signal configuration method, wherein the method is applied to a base station and comprises:
determining (102) an uplink reference signal structure of a terminal according to a preset rule;
configuring a downlink reference signal structure according to the preset rule; and
sending (103) configuration information to the terminal, wherein the configuration information is used to indicate the terminal to configure an uplink reference signal based on the uplink reference signal structure; and
the uplink reference signal structure comprises at least one uplink reference signal that does not overlap downlink data sent by the base station;
**characterized in that** the preset rule comprises, at least:
the uplink signal reference structure comprises the uplink reference signal and m blank symbols, and the downlink reference signal structure comprises the downlink reference signal and n blank symbols, wherein
m is an integer greater than or equal to 1, and n is an integer greater than m.

13. A communication apparatus (500) , comprising:
a memory (503), configured to store an instruction; and
one or more processors (501) coupled to the memory (503), wherein the processor (501) is configured to execute the instruction, and the instruction, when executed by the processor, cause the apparatus (500) to perform the method according to any one of claims 1 to 12.

14. A computer-readable storage medium, wherein the computer-readable storage medium stores a computer program, the computer program comprises an instruction which, when the program is executed by a computer, causes the computer to perform the method according to any one of claims 1 to 12.

## Patentansprüche

1. Vollduplex-Referenzsignalkonfigurationsverfahren, wobei das Verfahren auf ein Endgerät angewendet wird und Folgendes umfasst:
Empfangen (103) von Konfigurationsinformationen; und
Konfigurieren (104) eines Uplink-Referenzsignals basierend auf den Konfigurationsinformationen, wobei
die Konfigurationsinformationen durch das Endgerät von einer Basisstation empfangen werden, nachdem die Basisstation gemäß einer voreingestellten Regel eine Uplink-Referenzsignalstruktur und eine Downlink-Referenzsignalstruktur des Endgeräts ermittelt hat; und
die Uplink-Referenzsignalstruktur mindestens ein Uplink-Referenzsignal, das sich nicht mit von der Basisstation empfangenen Downlink-Daten überschneidet, umfasst;
**dadurch gekennzeichnet, dass** die voreingestellte Regel mindestens Folgendes umfasst:
die Uplink-Signalreferenzstruktur umfasst das Uplink-Referenzsignal und m leere Symbole, und die Downlink-Referenzsignalstruktur umfasst das Downlink-Referenzsignal und n leere Symbole, wobei
m eine ganze Zahl größer als oder gleich 1 ist und n eine ganze Zahl größer als m ist.

2. Verfahren nach Anspruch 1, wobei die voreingestellte Regel zusätzlich mindestens Folgendes umfasst:
die Uplink-Referenzsignalstruktur umfasst k Uplink-Referenzsignale, wobei k eine ganze Zahl größer als 1ist; und/oder
die Downlink-Referenzsignalstruktur umfasst q Downlink-Referenzsignale, wobei q eine ganze Zahl größer als 1 ist.

3. Verfahren nach Anspruch 2, wobei die voreingestellte Regel zusätzlich mindestens Folgendes umfasst:
Ermitteln eines Wertes von k basierend auf einem Konfigurationsparameter der Basisstation, wobei
der Konfigurationsparameter dazu verwendet wird, einen Zellradius der Basisstation anzugeben.

4. Verfahren nach Anspruch 2, wobei die voreingestellte Regel zusätzlich mindestens Folgendes umfasst:
Ermitteln eines Wertes von k basierend auf einem Abstandsparameter zwischen dem Endgerät und der Basisstation.

5. Verfahren nach Anspruch 2, wobei die voreingestellte Regel zusätzlich mindestens Folgendes umfasst:
Ermitteln eines Wertes von q basierend auf einem Konfigurationsparameter der Basisstation, wobei
der Konfigurationsparameter dazu verwendet wird, einen Zellradius der Basisstation anzugeben.

6. Verfahren nach Anspruch 2, wobei die voreingestellte Regel zusätzlich mindestens Folgendes umfasst:
Ermitteln eines Wertes von q basierend auf einem Abstandsparameter zwischen dem Endgerät und der Basisstation.

7. Verfahren nach einem der Ansprüche 2 bis 6, wobei
die k Uplink-Referenzsignale in der Uplink-Referenzsignalstruktur aufeinanderfolgend sind und
die q Downlink-Referenzsignale in der Downlink-Referenzsignalstruktur aufeinanderfolgend sind.

8. Verfahren nach einem der Ansprüche 2 bis 7, wobei
das mindestens eine Uplink-Referenzsignal orthogonal zu dem Downlink-Referenzsignal in der Downlink-Referenzsignalstruktur ist.

9. Verfahren nach Anspruch 2, wobei ein Wert von k und ein Wert von q die folgende Formel erfüllen: $r \leq {T}_{cp} + \left(A-2\right) * {T}_{data} * c / 2 ,$wobei k+q=A; und
r stellt einen Abstand zwischen dem Endgerät und der Basisstation oder einen Zellradius der Basisstation dar, T_{cp} stellt eine Symbollänge eines zyklischen Präfixes in der Uplink-Referenzsignalstruktur und/oder der Downlink-Referenzsignalstruktur dar, T_{data} stellt eine Symbollänge des Uplink-Referenzsignals oder des Downlink-Referenzsignals dar und c stellt eine Lichtgeschwindigkeit dar.

10. Verfahren nach einem der Ansprüche 1 bis 9, wobei die voreingestellte Regel zusätzlich mindestens Folgendes umfasst:
Ermitteln eines Wertes von m und eines Wertes von n basierend auf dem Konfigurationsparameter der Basisstation, wobei
der Konfigurationsparameter dazu verwendet wird, einen Zellradius der Basisstation anzugeben.

11. Verfahren nach einem der Ansprüche 1 bis 9, wobei die voreingestellte Regel zusätzlich mindestens Folgendes umfasst: Ermitteln eines Wertes von m und eines Wertes von n basierend auf einem Abstandsparameter zwischen dem Endgerät und der Basisstation.

12. Vollduplex-Referenzsignalkonfigurationsverfahren, wobei das Verfahren auf eine Basisstation angewendet wird und Folgendes umfasst:
Ermitteln (102) einer Uplink-Referenzsignalstruktur eines Endgeräts gemäß einer voreingestellten Regel;
Konfigurieren einer Downlink-Referenzsignalstruktur gemäß der voreingestellten Regel; und
Senden (103) von Konfigurationsinformationen an das Endgerät, wobei die Konfigurationsinformationen dazu verwendet werden, dem Endgerät anzugeben, ein Uplink-Referenzsignal basierend auf der Uplink-Referenzsignalstruktur zu konfigurieren; und
die Uplink-Referenzsignalstruktur mindestens ein Uplink-Referenzsignal, das sich nicht mit durch die Basisstation gesendeten Downlink-Daten überschneidet, umfasst;
**dadurch gekennzeichnet, dass** die voreingestellte Regel mindestens Folgendes umfasst:
die Uplink-Signalreferenzstruktur umfasst das Uplink-Referenzsignal und m leere Symbole, und die Downlink-Referenzsignalstruktur umfasst das Downlink-Referenzsignal und n leere Symbole, wobei
m eine ganze Zahl größer als oder gleich 1 ist und n eine ganze Zahl größer als m ist.

13. Kommunikationsvorrichtung (500), umfassend:
einen Speicher (503), der dazu konfiguriert ist, eine Anweisung zu speichern; und
ein oder mehrere Prozessoren (501), die mit dem Speicher (503) gekoppelt sind, wobei der Prozessor (501) dazu konfiguriert ist, die Anweisung auszuführen, und die Anweisung, wenn sie durch den Prozessor ausgeführt wird,
die Vorrichtung (500) dazu veranlasst, das Verfahren nach einem der Ansprüche 1 bis 12 durchzuführen.

14. Computerlesbares Speichermedium, wobei das computerlesbare Speichermedium ein Computerprogramm speichert, das Computerprogramm eine Anweisung umfasst, die, wenn das Programm durch einen Computer ausgeführt wird, den Computer dazu veranlasst, das Verfahren nach einem der Ansprüche 1 bis 12 durchzuführen.

## Revendications

1. Procédé de configuration d'un signal de référence en duplex intégral, dans lequel le procédé appliqué à un premier terminal et comprend :
la réception (103) d'informations de configuration ; et
la configuration (104) d'un signal de référence de liaison montante sur la base des informations de configuration, dans lequel
les informations de configuration sont reçues par le terminal provenant d'une station de base après que la station de base a déterminé une structure du signal de référence de liaison montante et une structure du signal de référence de liaison descendante du terminal selon une règle prédéfinie ; et
la structure du signal de référence de liaison montante comprend au moins un signal de référence de liaison montante qui ne chevauche pas des données de liaison descendante reçues de la station de base ;
**caractérisé en ce que** la règle prédéfinie comprend au moins :
la structure du signal de référence de liaison montante comprend le signal de référence de liaison montante et m symboles vides, et la structure du signal de référence de liaison descendante comprend le signal de référence de liaison descendante et n symboles vides, dans lequel
m est un entier supérieur ou égal à 1, et n est un entier supérieur à m.

2. Procédé selon la revendication 1, dans lequel la règle prédéfinie comprend de plus au moins :
la structure du signal de référence de liaison montante comprend k signaux de référence de liaison montante, dans lequel k est un entier supérieur à 1 ; et/ou
la structure du signal de référence de liaison descendante comprend q signaux de référence de liaison descendante, dans lequel q est un entier supérieur à 1.

3. Procédé selon la revendication 2, dans lequel la règle prédéfinie comprend de plus au moins :
la détermination d'une valeur de k sur la base d'un paramètre de configuration de la station de base, dans lequel
le paramètre de configuration est utilisé pour indiquer le rayon de cellule de la station de base.

4. Procédé selon la revendication 2, dans lequel la règle prédéfinie comprend de plus au moins :
la détermination d'une valeur de k sur la base d'un paramètre de distance entre le terminal et la station de base.

5. Procédé selon la revendication 2, dans lequel la règle prédéfinie comprend de plus au moins :
la détermination d'une valeur de q sur la base d'un paramètre de configuration de la station de base, dans lequel
le paramètre de configuration est utilisé pour indiquer le rayon de cellule de la station de base.

6. Procédé selon la revendication 2, dans lequel la règle prédéfinie comprend de plus au moins :
la détermination d'une valeur de q sur la base d'un paramètre de distance entre le terminal et la station de base.

7. Procédé selon l'une quelconque des revendications 2 à 6, dans lequel
les k signaux de référence de liaison montante sont consécutifs dans la structure du signal de référence de liaison montante, et
les q signaux de référence de liaison descendante sont consécutifs dans la structure du signal de référence de liaison descendante.

8. Procédé selon l'une quelconque des revendications 2 à 7, dans lequel
l'au moins un signal de référence de liaison montante est orthogonal au signal de référence de liaison descendante dans la structure du signal de référence de liaison descendante.

9. Procédé selon la revendication 2, dans lequel une valeur de k et une valeur de q satisfont à la formule suivante : $r \leq {T}_{cp} + \left(A-2\right) * {T}_{data} * c / 2 ,$ dans lequel k+q=A ; et
r représente une distance entre le terminal et la station de base ou un rayon de cellule de la station de base, T_{cp} représente une longueur de symbole d'un préfixe cyclique dans la structure du signal de référence de liaison montante et/ou la structure du signal de référence de liaison descendante, T_{data} représente une longueur de symbole du signal de référence de liaison montante ou du signal de référence de liaison descendante, et c représente la vitesse de la lumière.

10. Procédé selon l'une quelconque des revendications 1 à 9, dans lequel la règle prédéfinie comprend de plus au moins :
la détermination d'une valeur de m et d'une valeur de n sur la base d'un paramètre de configuration de la station de base, dans lequel
le paramètre de configuration est utilisé pour indiquer le rayon de cellule de la station de base.

11. Procédé selon l'une quelconque des revendications 1 à 9, dans lequel la règle prédéfinie comprend de plus au moins :
la détermination d'une valeur de m et d'une valeur de n sur la base d'un paramètre de distance entre le terminal et la station de base.

12. Procédé de configuration d'un signal de référence en duplex intégral, dans lequel le procédé appliqué à une station de base et comprend :
la détermination (102) d'une structure du signal de référence de liaison montante d'un terminal selon une règle prédéfinie ;
la configuration d'une structure du signal de référence de liaison descendante selon la règle prédéfinie ; et
l'envoi (103) d'informations de configuration au terminal, dans lequel les informations de configuration sont utilisées pour indiquer au terminal de configurer un signal de référence de liaison montante sur la base de la structure du signal de référence de liaison montante ; et
la structure du signal de référence de liaison montante comprend au moins un signal de référence de liaison montante qui ne chevauche pas des données de liaison descendante envoyées par la station de base ;
**caractérisé en ce que** la règle prédéfinie comprend au moins :
la structure du signal de référence de liaison montante comprend le signal de référence de liaison montante et m symboles vides, et la structure du signal de référence de liaison descendante comprend le signal de référence de liaison descendante et n symboles vides, dans lequel
m est un entier supérieur ou égal à 1, et n est un entier supérieur à m.

13. Appareil de communication (500), comprenant :
une mémoire (503), configurée pour stocker une instruction ; et un ou plusieurs processeurs (501) couplés à la mémoire (503), dans lequel le processeur (501) est configuré pour exécuter l'instruction, et l'instruction, lorsqu'elle est exécutée par le processeur,
amène l'appareil (500) à réaliser le procédé selon l'une quelconque des revendications 1 à 12.

14. Support de stockage lisible par ordinateur, dans lequel le support de stockage lisible par ordinateur stocke un programme informatique, le programme informatique comprend une instruction qui, lorsque le programme est exécuté par un ordinateur, amène l'ordinateur à réaliser le procédé selon l'une quelconque des revendications 1 à 12.
